# EUROPEAN PATENT APPLICATION

(11) **EP 1 710 677 A1**
(43) Date of publication of application: **11.10.2006**
(21) Application number: 05703776.4
(22) Date of filing: 18.01.2005
(51) Int. Cl.: G06F 3/12, G06F 13/00, B41J 5/00, B41J 29/00

(54) **PRINTING APPARATUS, PRINT INSTRUCTION APPARATUS, AND PRINTING SYSTEM**

(30) Priority: 20.01.2004 JP 2004011358; 20.01.2004 JP 2004011359
(71) Applicant: Matsushita Electric Industries Co., Ltd., Kadoma-shi, Osaka 571-8501 (JP)
(72) Inventor: HIGASHIMURA, Takahiro c/o Matsushita El. Ind. Co.,, Chuo-ku, Osaka-shi, Osaka 540-6319 (JP); YAMAGUCHI, Takehito c/o Matsushita El. Ind. Co.,, Chuo-ku, Osaka-shi, Osaka 540-6319 (JP); MATSUNAGA, Shigeki c/o Matsushita El. Ind. Co.,, Chuo-ku, Osaka-shi, Osaka 540-6319 (JP)
(74) Representative: Pautex Schneider, Nicole Véronique
(86) International application number: PCT/JP2005/000539
(87) International publication number: WO 2005/069119

(57) **Abstract**

Provided is a printing apparatus which receives a print instruction, then obtains and prints print data including plural pieces of sub-data, and
the printing apparatus includes: a print data obtainment unit (interpreter 1203) which obtains the sub-data; a determination unit (rasterizer 1202) which determines whether or not there is necessity of further obtaining of the obtained sub-data, by the interpreter 1203, in order to complete printing of the print data; and a notification unit (communication I/F 1204) which notifies a result of the determination, to a print instruction apparatus which issues the print instruction, when the determination is made that there is no necessity.

## Description

### Technical Field

The present invention relates to a printing apparatus, a print instruction apparatus, and a printing system, and more particularly to a memory release control technology for a print buffer which stores print data temporarily.

### Background Art

Conventionally, regarding printing systems connected via a network, in a printing system using a Pull method, by which a printing apparatus (hereinafter, referred to also as "image forming device" or "printer") requests a print instruction apparatus (hereinafter, referred to also as "document image supplying apparatus", or "host apparatus") to transfer print data, the print data is accumulated into a print buffer included in the document image supplying apparatus, then during printing performed by the image forming apparatus, necessary print data is requested, every time the print data becomes necessary, to be transferred from the document image supplying apparatus, and eventually the necessary print data is received and printed.

During the printing processing, the document image supplying apparatus has to delete, as needed, data that becomes no longer necessary in the printing processing, in order to efficiently use the print buffer.

As memory release control methods for the print buffer, which have been conventionally used, there are methods, by which the image forming apparatus requests the document image supplying apparatus to transfer print data; and when a transfer response performed at completion of the receiving is received by the document image supplying apparatus, the print data is deleted from the print buffer; or in the same manner performed in a printing system using a push method, when the document image supplying apparatus determines that the transfer of the print data is completed, the print data is deleted from the print buffer.

For example, as shown in FIG. 1, when print data is processed by band processing, print data in the first band, the second band, ... are stored alternately into a raster memory A or B shown in FIG. 2, then repeats the following processing: after transfer of print data in the first band is completed, then the print data in the first band is deleted and print data in the third band is stored into the raster memory A, and after transfer of print data in the second band is completed, then the print data in the second band is deleted and print data in the fourth band is stored into the raster memory B. FIG. 3 is a diagram showing timings when the band data are stored into the raster memories, transferred, and deleted.

In such a printing system using the push method, the document image supplying apparatus transmits print data to be printed, to the image forming apparatus, so that there is no problem when, after completion of the print data transfer, the document image supplying apparatus deletes the print data from the print buffer.

In the meantime, with popularization of networking in offices, network-enable printers have been widely used. In the future, the networking will be popularized also at home, so that network-enable printers at home would be widely used. Note that, as networks for the networked printing, not only a local area network (LAN) which has been conventionally used, but also the Internet is getting to be used.

Here, one of the networked printing methods is a print-by-reference method (in this description, hereinafter, referred to as PBR method). In the PBR method, a host apparatus serves also as a server for print data, and the host sends, to a printer, a print instruction which designates an URL, and the printer which receives the print instruction obtains data from a Web server designated by the URL and then prints the data.

Here, by designating data on the Internet by the URL, data on the Internet is also be able to be printed.

In the PBR method, even a host without an Internet connection function can print data on the Internet, which is a big advantage. For an inexpensive host, it is difficult to have the Internet connection function which results in significant cost increase, but even such a host can realize a print function for data on the Internet, so that the PBR method is expected to be widely used in the future.

Here, as a typical Internet printing protocol, there is an Internet printing protocol (in this description, hereinafter, referred to as IPP) that is a standard protocol defined by Request For Comments (RFC), and the IPP also defines a print-URI request which is compliant with the PBR method. Regarding an operation using the IPP, when a host sends a "Print-URI request" which designates an URL, to a printer, then the printer which receives the request obtains data on a Web server designated by the URL and performs printing. Using this print-URI function, it is possible to print data on Web servers around the world.

By the way, examples of print data processed in the PBR-method-compliant printer are: data described in a page description language represented by Post Script; data described in a printer control language represented by Printer Control Language (PCL); image data compressed by JPEG; and the like, and additionally, data described in a markup language represented by HTML (hereinafter, referred to as markup data) and the like.

Here, the markup data can use description by which internal data refers to other external data, but when, in the PBR method, the markup data is designated as print data and instructed to be printed, if the designated markup data refers to data that would be data to be printed, not only the markup data but also the reference data becomes data to be printed.

By the way, in a printing system compliant with the PBR method, three of a client, a printer, a Web server appear, but each of them does not need to exist as a different apparatus. A system configuration, in which the client and the Web server are implemented as a single host apparatus, and connected to the printer, is also possible. In the system configuration, there are only two apparatuses, therefore this system configuration is hereinafter referred to, in the description, as a bilateral system. The bilateral system has the same configuration of a usual LAN-compliant printing system which includes a host apparatus and a printing apparatus, and a printing apparatus, which can perform the Internet printing by the PBR method, can be directly used as a LAN-compliant printer.

Here, as a conventional technology, there is an example of the bilateral system using the PBR method (patent document 1, for example). In the patent document 1, a protocol of the PBR is realized by a print-URI request in the IPP.

In the bilateral system of this conventional example, a host apparatus sends, using a print-URI request, an URL designating print data in the host apparatus, to a printer. The printer determines, using the URL, that the print data exists in the host apparatus on a network, then accesses a Web server of the host apparatus, and downloads and prints the designated print data.

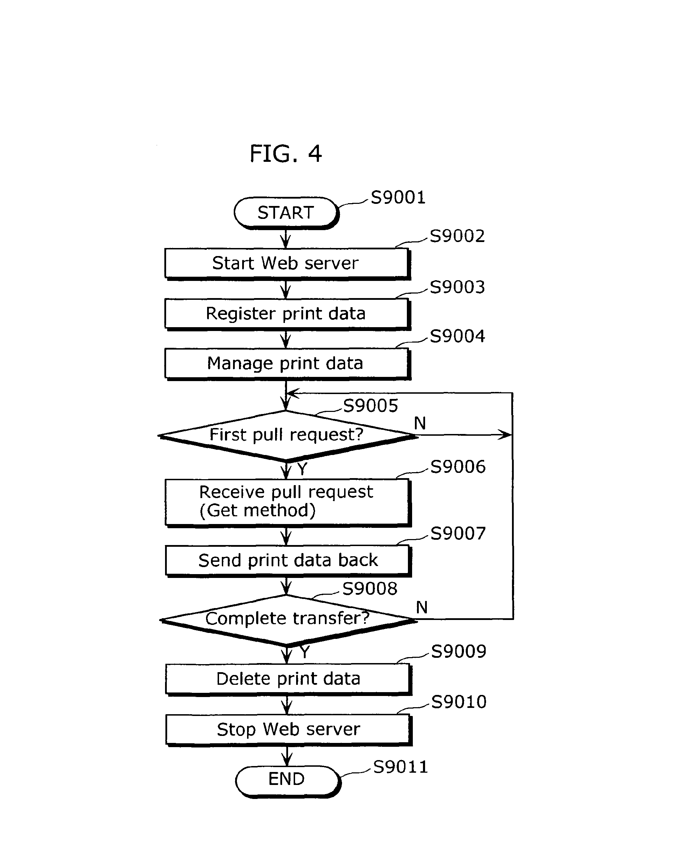

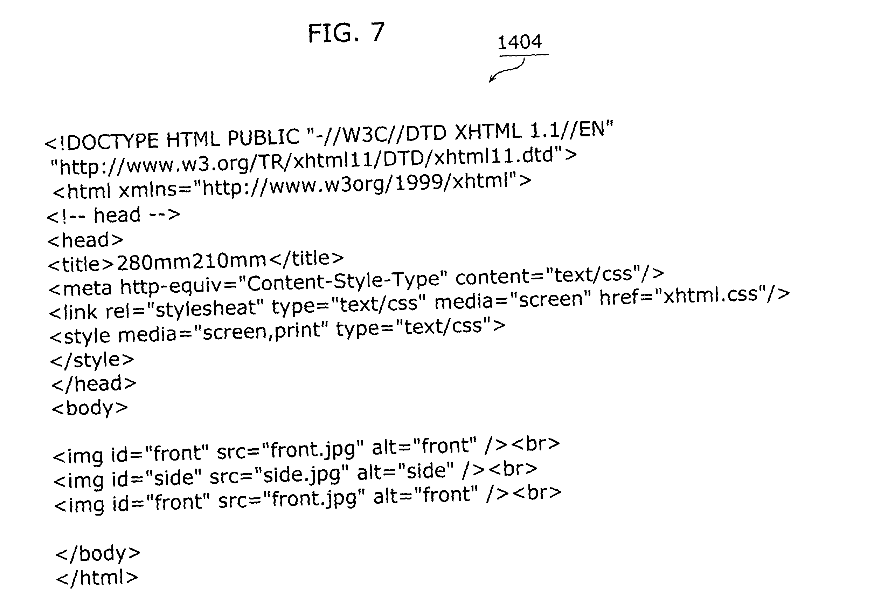

FIG. 4 is a flowchart showing operations of data processing performed by the host apparatus according to this conventional example (see FIG. 7 of patent document 1). Note that, the following describes intensively an aspect regarding timings of data transfer and deletion of print data, and described briefly other aspects.

Firstly, at Step S9001, when a Web server for transferring print data does not start, the Web server is started up (S9002).

Next, print data is registered (S9003), and management of the print data is performed (S9004).

Next, when a pull request for the data (download request) is received from the printer, a determination is made as to whether the request is the first pull request for the print data (S9005).

If the request is the first pull request, then the pull request is received (S9006) and the print data is transferred to the printer (S9007).

Then, a determination is made as to whether the transfer of the print data is completed (S9008), and if the determination is made that the transfer of the print data is completed, then the processing proceeds to Step S9009 to delete the print data from the host apparatus, then the Web server is stopped (S9010), and the processing terminates (S9011).

Note that the PBR method generally does not standardize a timing of deleting print data on the Web server. The timing depends on each implementation, and the same goes for the IPP.

In general, in the bilateral system of the PBR, after the host apparatus confirms that the printer completes printing output, the host apparatus deletes the print data in the host apparatus. This is because it is obvious, from the completion of printing output, that the print data is no longer necessary.

Here, printing processing using print engine requires more time as compared to other processing such as the print data transferring. If the print data needs to be kept until the completion of printing output, for a long time the host apparatus cannot release a print data buffer (work memory such as a RAM) for storing the print data, so that an efficient and effective use of system resources becomes difficult.

On the other hand, in this conventional example, assuming that the printer does not re-download print data that has once been downloaded, at a time point when transmission of the print data is completed, the print data is determined to be unnecessary and then deleted.

In this conventional example, since the transmission of print data is completed much earlier than the completion of printing output, the print data buffer storing the print data can be released earlier, so that it is aimed that system resources of the host apparatus can be provided to other processing except the printing at a early timing, and can be used efficiently and effectively.
Patent document 1: Japanese Patent Laid-Open No. 2002-202874 publication

### Disclosure of Invention

### Problem to be Solved by the Invention

However, in the memory release control method of the printing system using the pull method, which has been conventionally used, when, for example, a document such as a HTML content on the Internet is a print document, an identical image object is often used a number of times in a single print document.

In this case, even if the first transfer of the image data from the document image supplying apparatus to the image forming apparatus is completed, the image forming apparatus requests the image forming apparatus to transfer the same image again. In the conventional memory release control method using the pull method, at completion of the first transfer, the image data is deleted, so that the second and following transfer requests are not able to be treated.

In such a case, in the conventional printing system using the pull method, a print object, which has been requested more than twice to be transferred, is deleted from the print buffer, so that in response to a transfer request for the print object sent from the image forming apparatus, the document image supplying apparatus carries a further load in order to create the same print object again, or fails to respond to the transfer request for the print object from the image forming apparatus.

Even in the printing system using the pull method in which there is a possibility that print data is re-requested, the print buffer can be released after a print job is finished, so that there is no problem if a print buffer, which can store all print data necessary for one print job at minimum, but if a capacity of the print buffer is not enough, there is a situation where new print data is not able to be stored in the buffer after transferring print data, thereby failing to continue to transfer print data.

This means that, in the conventional technology, as a result of having deleted the print data too early, when a re-request for the print data occurs, the print data needs to be created again and stored into the print buffer, so that there is a problem that an overhead becomes large when the re-request for the print data occurs.

In the mean time, in the PBR method, even if the printer has already downloaded print data, it is not certain that the printer will not request re-downloading of the same print data. The same goes for the PBR in the bilateral system. Whether or not the re-downloading is requested depends on implementation of the printer.

In the PBR method, by using the re-downloading effectively, even an inexpensive printer having only little system resources (RAM or the like) can realize high performance.

The following describes on example. The example is when image data is rotated to be printed. A line printer represented by an inkjet printer is able to have a configuration in which a print data buffer stores print data whose amount is necessary only for printer-head scanning in order to be printed, so that it is possible to reduce a memory size for realizing the print data buffer, thereby realizing cost reduction.

Here, it is examined how to realize the image rotation printing function by the line printer which prints using the PBR method. The simplest method is that a whole image data is downloaded, then the whole image data is stored into a printer buffer of the printer, and the data is rotated to be printed. By this method, downloading needs only once, and re-downloading is not necessary. However, a size of the image data becomes usually quite large, so that storing of the whole image data requires a large-sized printer buffer memory, which results in cost increase thereby failing to provide an inexpensive printer.

On the other hand, there is a method by which, among the downloaded image data, only an amount of image data, which is necessary for printer-head scanning and able to be stored in a small printer buffer, is rotated and stored into the printer buffer, thereby performing the rotation printing. By this method, the rotated image is not able to be created only once, but "downloading and rotating" of the image data needs to be repeated, in order to rotate the image data to be printed, thereby performing the image rotation printing. In the case of this method, identical print data needs to be downloaded a number of times, but even an inexpensive line printer having only a small print data buffer can realize high performance such as the image rotation.

Thus, if print data is re-downloaded to the networked printer using the PBR method, high performance can be realized using inexpensive configuration.

However, the data processing performed by the conventional host apparatus has had a problem that request of re-downloading from the printer is not able to be replied, which fails to continue printing processing which needs the re-downloading of print data.

Moreover, by using a method by which print data is deleted at the completion of printing output performed by the general bilateral system using the PBR, the request of re-downloading can be replied, but there still remains the problem of the difficulty of the efficient and effective use of the system resources for storing the print data.

Thus, in the conventional technologies, as a result of having deleting print data too early, if a re-request for print data occurs, the print data needs to be created again and stored into the print buffer, so that there are problems that an overhead becomes large when the re-request for the print data occurs and that the print buffer needs to keep the print data too long.

Therefore, an object of the present invention is to provide a printing apparatus, a print instruction apparatus, and a printing system, which are able to prevent from the occurrence of the overhead and from the too long keeping of print data, and at the same time able to use the print buffer efficiently.

### Means for Solving Problems

In order to achieve the above object, a printing apparatus according to the present invention receives a print instruction, then obtains print data including plural pieces of sub-data, and prints the print data. The printing apparatus includes: a print data obtainment unit which obtains the sub-data; a determination unit which determines whether or not there is necessity of further obtaining of the obtained sub-data, by the data obtainment unit, in order to complete printing of the print data; and a notification unit which notifies a result of the determination, to a print instruction apparatus which issues the print instruction, when the determination is made that there is no necessity.

Thereby, the print instruction apparatus, which is notified of the information, learns that the print data is no longer obtained again, so that it is possible to promptly delete the print data from the print buffer. Therefore, it is possible to completely prevent from the occurrence of the overhead and from the too long keeping of the print data, and at the same time able to efficiently use the print buffer.

Further, in the printing apparatus according to the present invention, the print data may include one parent sub-data and one or more child sub-data which are referred to by the parent sub-data, the print data obtainment unit may obtain the parent sub-data prior to child sub-data, and the determination unit maydetermine the necessity regarding the child sub-data referred to by the obtained parent sub-data.

Thereby, the print instruction apparatus can determine, for each child sub-data, whether or not there is a possibility that the child sub-data is to be obtained again.

Still further, in the printing apparatus according to the present invention, the determination unit may determine that there is no necessity, when the child sub-data obtained by the print data obtainment unit is referred to by only one part in the parent sub-data.

Thereby, it is possible to prevent from a situation where the child sub-data is deleted when the child sub-data is referred for other parts.

Still further, in the printing apparatus according to the present invention, the determination unit may determine that there is no necessity, when the child sub-data obtained by the print data obtainment unit is not further referred to by the parent sub-data.

Therefore, it is possible to completely prevent from the occurrence of the overhead and from the too long keeping of the print data, and at the same time able to promptly release the print buffer.

Still further, in the printing apparatus according to the present invention, the child sub-data referred to by the parent sub-data may include grand-child sub-data referred to by the child sub-data.

Thereby, it is possible to gather grand-child sub-data (image data) from various parts to construct the print data.

Still further, in the printing apparatus according to the present invention, the determination unit may determine the necessity only regarding the parent sub-data.

Thereby, it is possible to promptly delete the parent sub-data, when the print buffer stores only the parent sub-data.

Still further, in the printing apparatus according to the present invention, the notification unit may notify a result of the determination, only when a request for the notification is received from the print instruction apparatus.

Thereby, when the request for the notification is not received, the notification is not necessary, so that it is possible to simplify processing performed by the printing apparatus, and to release the print buffer using a method whose communication amount is small.

Still further, in the printing apparatus according to the present invention, the notification unit may determine whether or not the print instruction includes the request for the notification, and notify a result of the determination regarding the necessity, only when the request is included.

Thereby, the notification is performed only when the request for the notification is included, so that it is possible to completely prevent from the occurrence of the overhead and from the too long keeping of the print data.

Still further, in the printing apparatus according to the present invention, the parent sub-data may be described in a markup language, and the child sub-data may be data except the data described in the markup language.

Still further, in the printing apparatus according to the present invention, the parent sub-data may be described in a hyper text markup language (HTML), and the child sub-data may be one of image data and style information data.

Moreover, in order to achieve the above object, a print instruction apparatus according to the present invention instructs a printing apparatus to print print data including plural pieces of sub-data. The print instruction apparatus includes: a print buffer in which least one of the sub-data is held; a print data output unit which outputs the sub-data held in the print buffer, to the printing apparatus; a necessity receiving unit which receives, from the printing apparatus, a notification that there is no necessity of further obtaining of the outputted sub-data, by the printing apparatus, in order to complete printing of the print data; and a deletion unit which deletes the sub-data corresponding to the notification, from the print buffer, when the notification is received.

Thereby, it is possible to promptly delete the print data from the print buffer, only when the information is notified. Therefore, it is possible to completely prevent from the occurrence of the overhead and from the too long keeping of the print data, and at the same time able to efficiently use the print buffer.

Further, in the print instruction apparatus according to the present invention, the print data may include one parent sub-data and one or more child sub-data which are referred to by the parent sub-data, the print buffer may hold only the parent sub-data among the sub-data included in the print data, and the deletion unit may delete the parent data from the print buffer.

Note that the present invention can be realized, not only as the above printing apparatus and the print instruction apparatus, but also as a printing system which includes the printing apparatus and the print instruction apparatus, as a printing method and a print instruction method which include steps performed by the units of the printing apparatus and the print instruction apparatus, and as a program which causes a computer to execute these steps. Note also that it is obvious that the program can be distributed via a recording medium such as a CD-ROM or a transmission medium such as the Internet.

### Effect of the Invention

As apparent from the above description, in the printing apparatus, the print instruction apparatus, and the printing system according to the present invention, only when the print data is no longer obtained again, the print data can be promptly deleted from the print buffer. Therefore, it is possible to completely prevent from the occurrence of the overhead and from the too long keeping of the print data, and at the same time able to efficiently use the print buffer.

Therefore, according to the present invention, a printing system using the pull method, in which an efficient and effective use of the system resources can be realized among apparatuses having little hardware resources, can be realized, so that the present invention is highly suitable for practical use, in recent days the Internet has been widely used.

The present invention will become apparent from the following embodiments and the accompanying drawings, but the embodiments nor the drawings are provided only as specific examples, and the present invention is not limited to the embodiments nor the drawings.

### Brief Description of Drawings

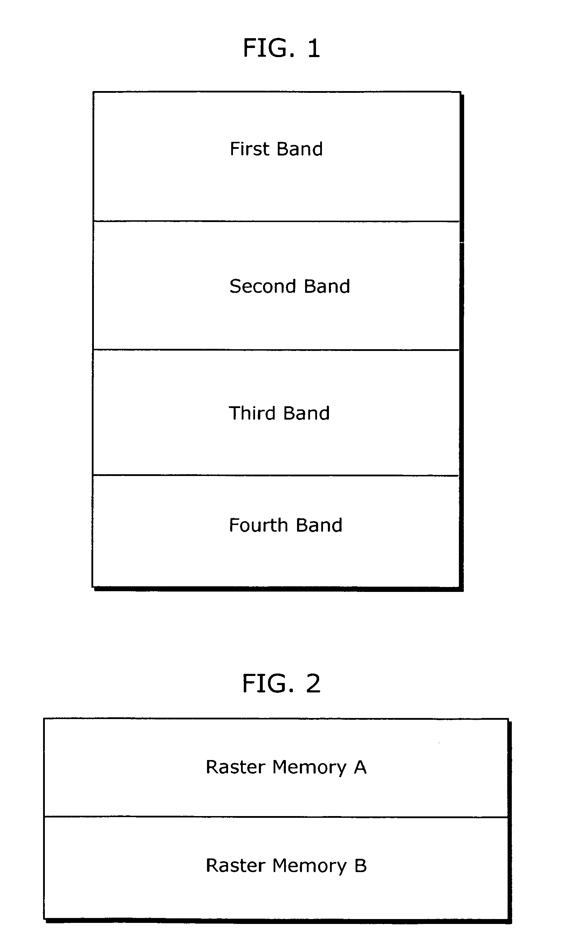

[FIG. 1] FIG. 1 is a diagram showing band processing for print data in a printing system.
[FIG. 2] FIG. 2 is a diagram showing a usage example of a print buffer for storing the print data.

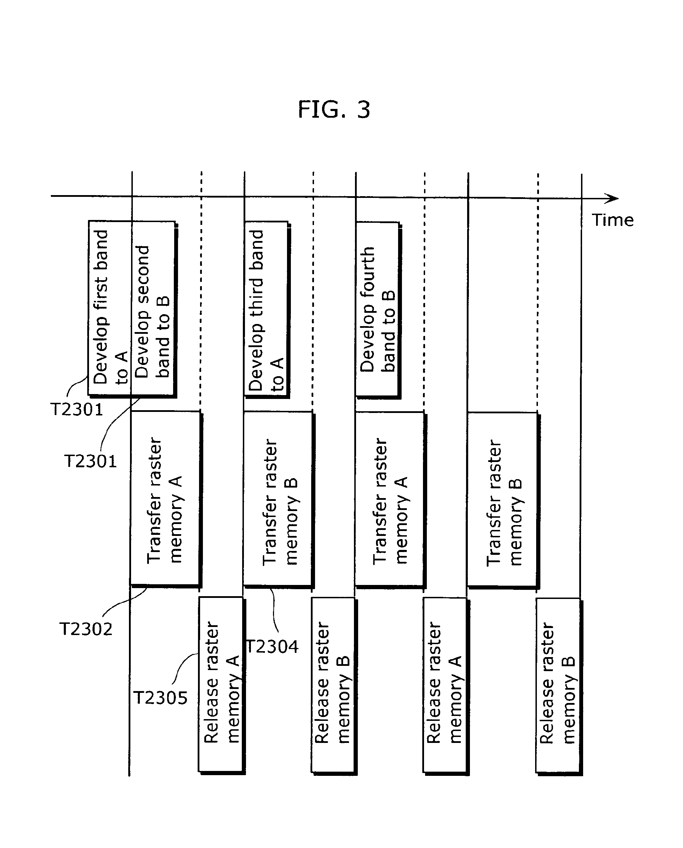

[FIG. 3] FIG. 3 is a diagram showing timings when band data of FIG. 1 are stored into raster memories of FIG. 2, transferred, and deleted.
[FIG. 4] FIG. 4 is a flowchart showing one example of a data processing operation performed by a host apparatus according to the conventional example.

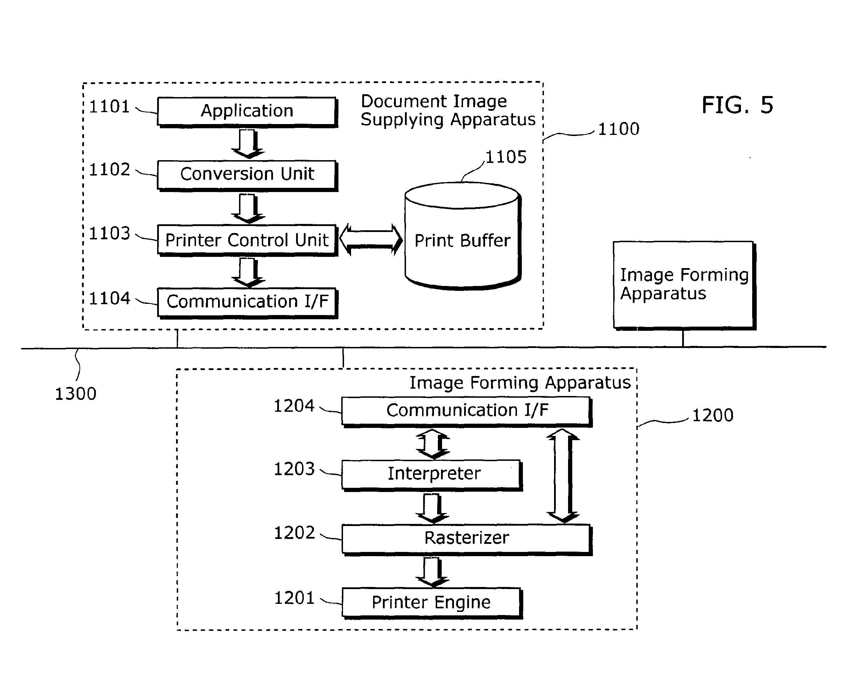

[FIG. 5] FIG. 5 is a block diagram showing a whole configuration of a printing system according to an embodiment of the present invention.

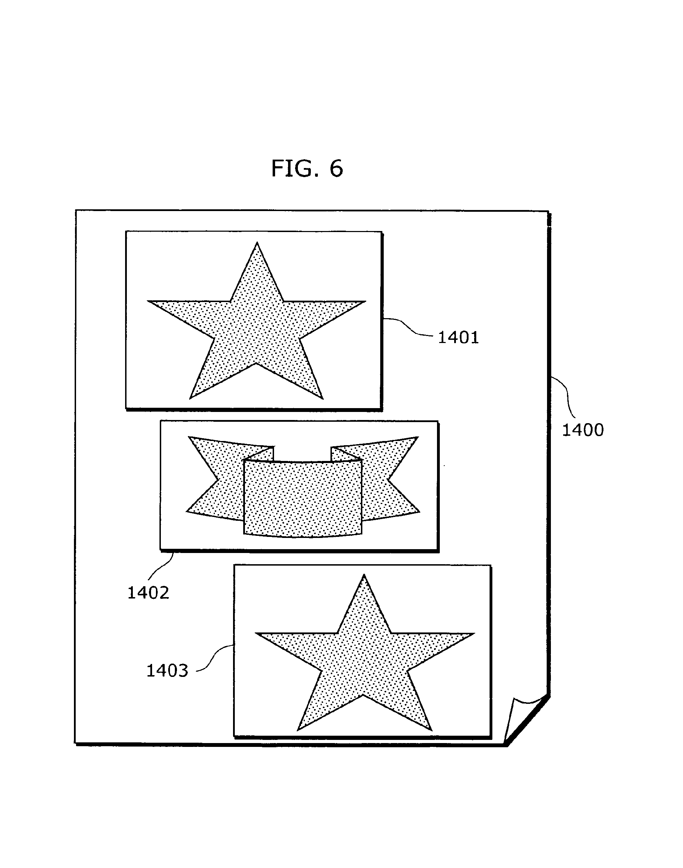

[FIG. 6] FIG. 6 is a diagram showing an example of a print document according to the first embodiment.
[FIG. 7] FIG. 7 is a diagram showing print description data which indicates a print document.

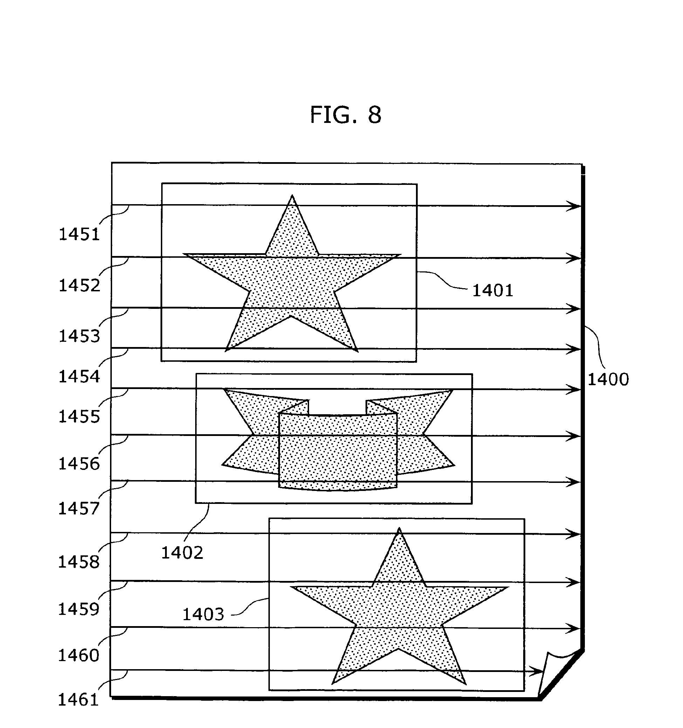

[FIG. 8] FIG. 8 is a diagram showing a rasterizing processing for the print description data.

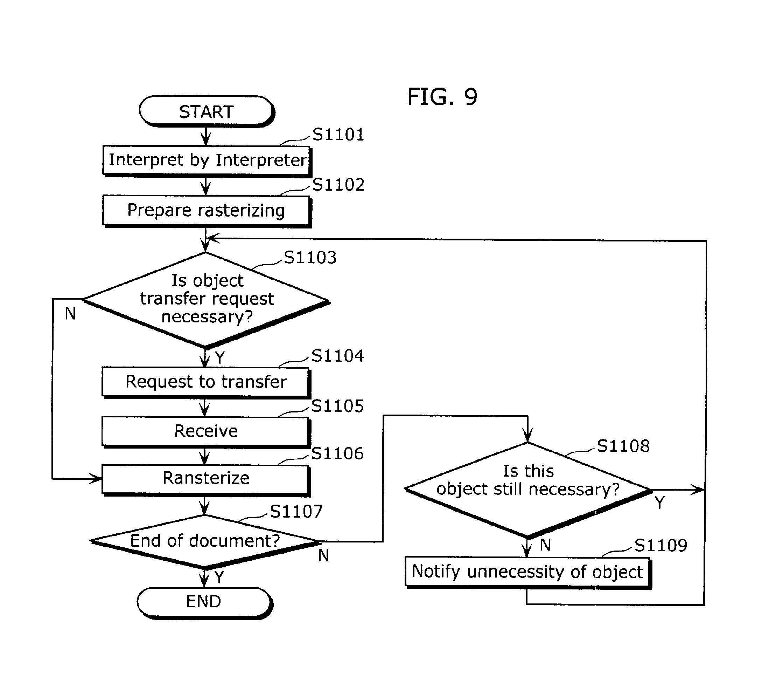

[FIG. 9] FIG. 9 is a chart showing a processing flow performed by an image forming apparatus, which includes processing of necessity determination for print object.

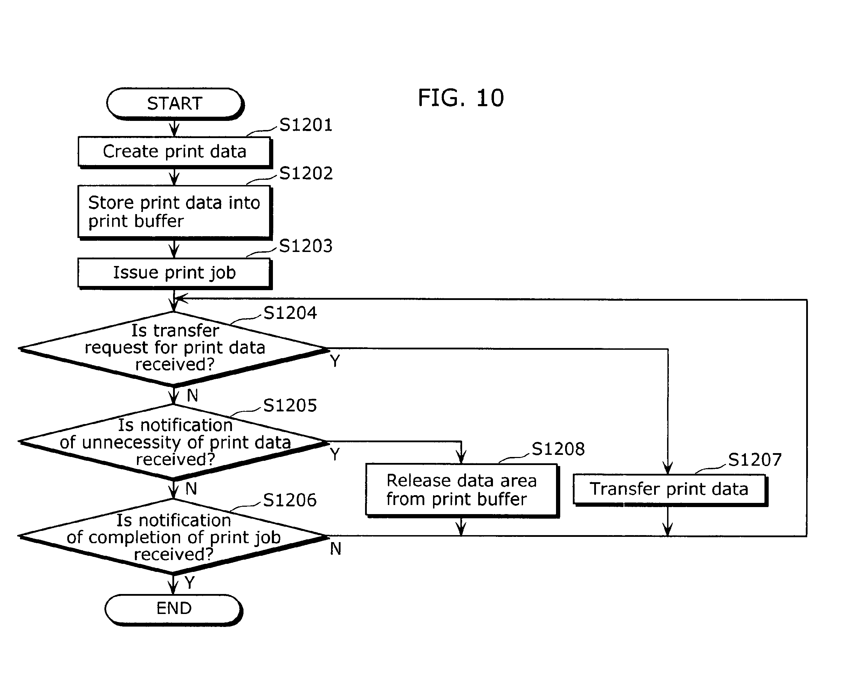

[FIG. 10] FIG. 10 is a chart showing a flow of print buffer release in response to a notification of unnecessity of a printing object.

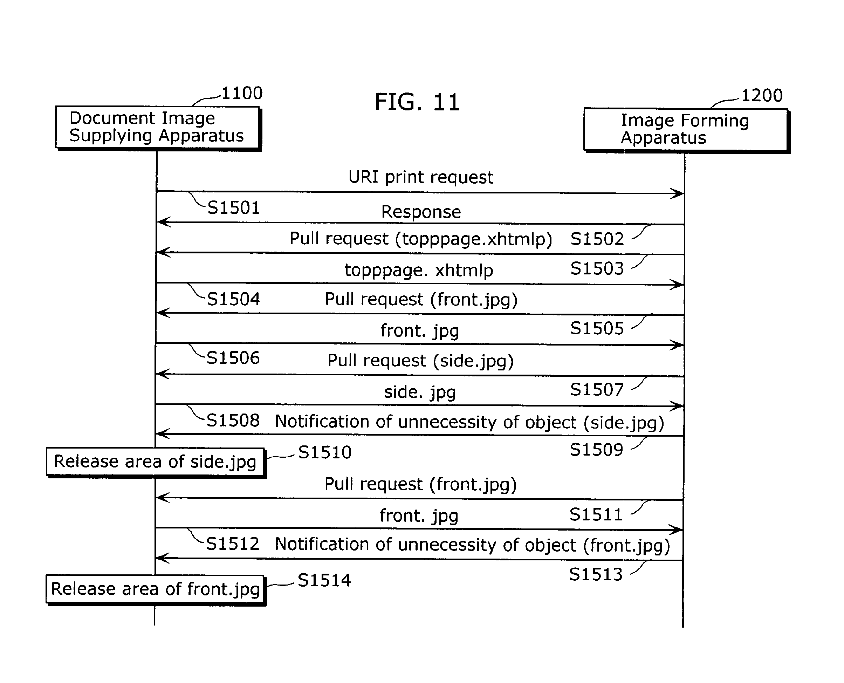

[FIG. 11] FIG. 11 is a diagram showing a communication sequence between a document image supplying apparatus and an image forming apparatus according to the first embodiment of the present invention.

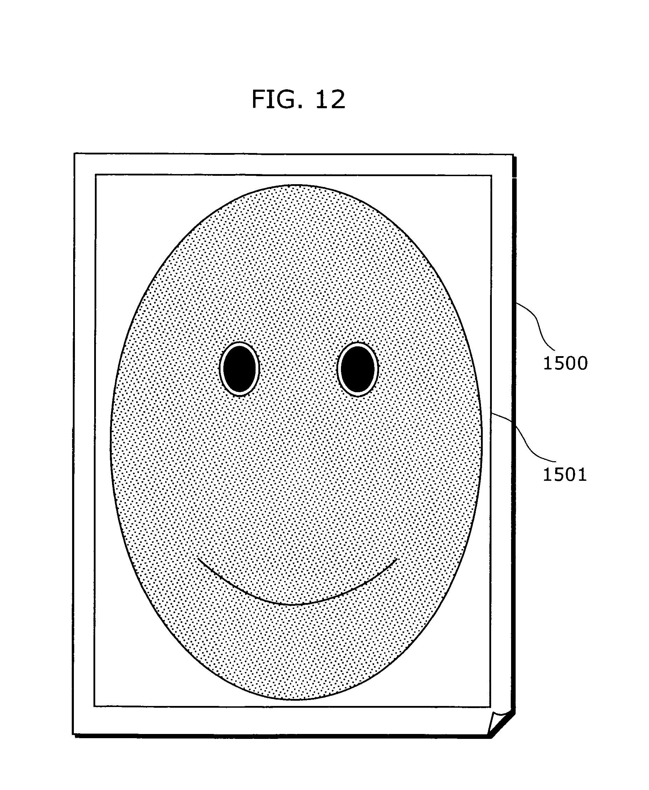

[FIG. 12] FIG. 12 is a diagram showing an example of a print document according to the second embodiment.

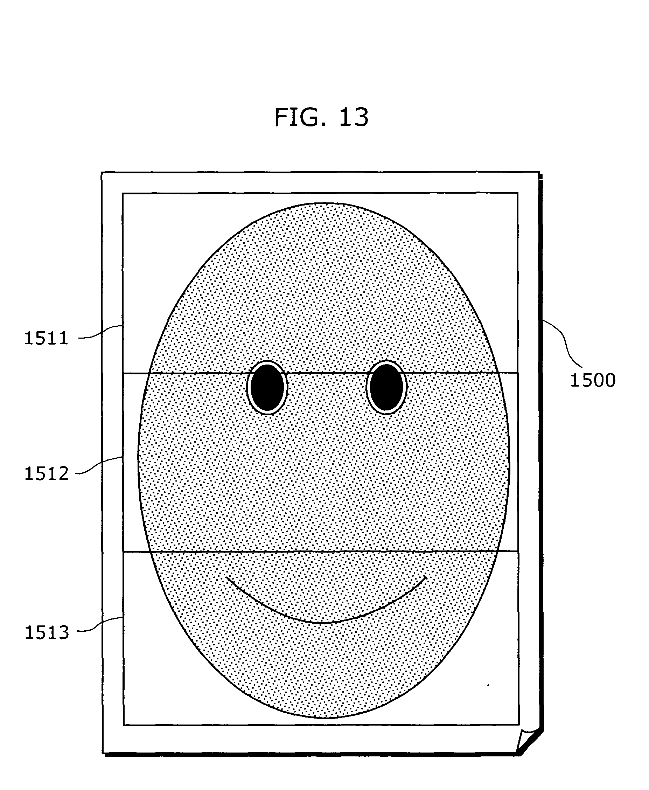

[FIG. 13] FIG. 13 is a diagram showing a detailed structure of the print document according to the second embodiment.

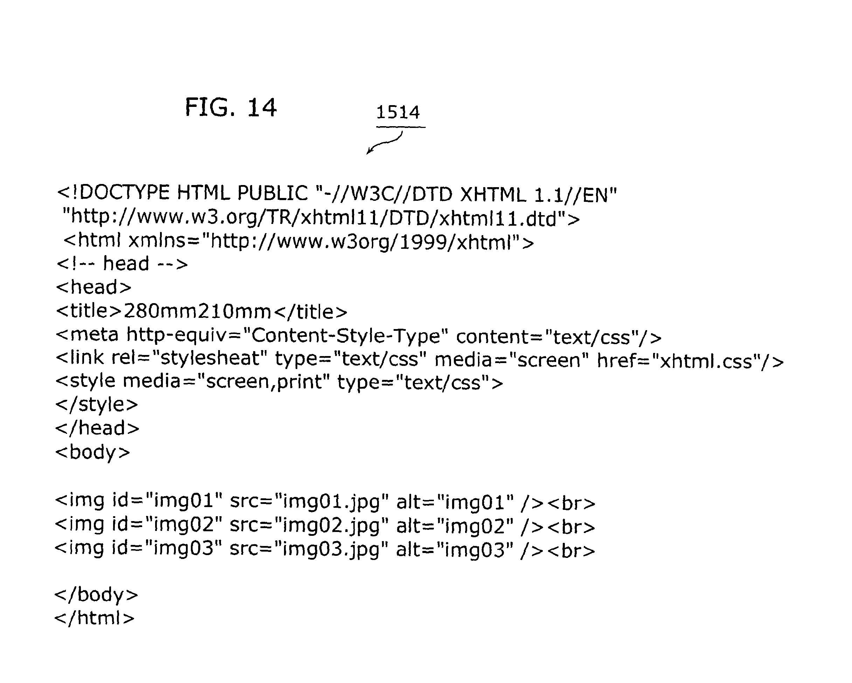

[FIG. 14] FIG. 14 is a diagram showing a print description data which indicates the print document of FIG. 13.

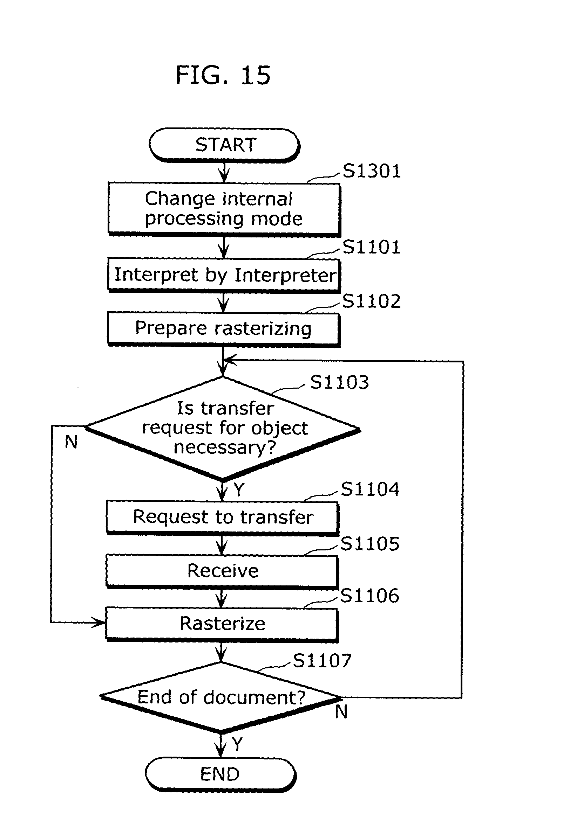

[FIG. 15] FIG. 15 is a chart showing a processing flow performed by the image forming apparatus, which includes processing for changing an internal processing mode.

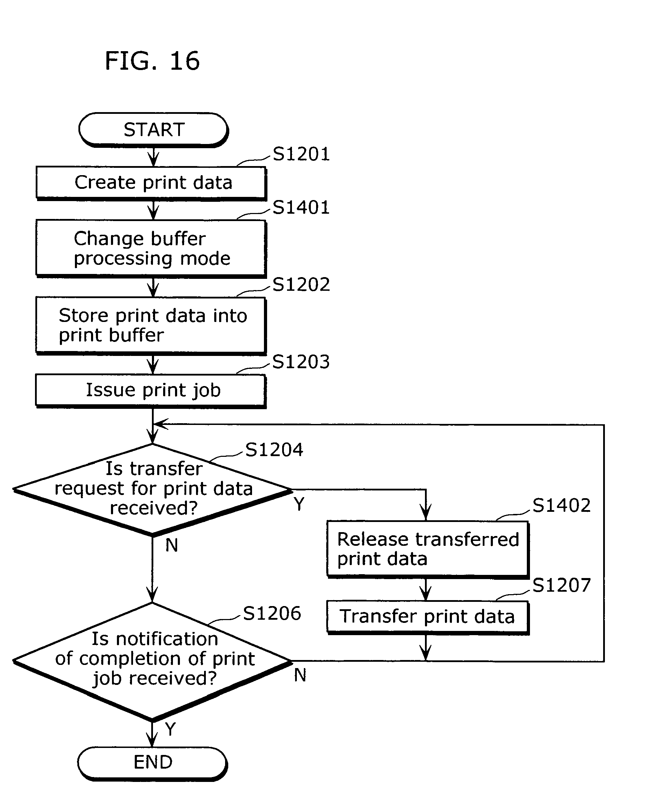

[FIG. 16] FIG. 16 is a chart showing a flow of releasing a transferred printing object in response to a request for print object transfer.

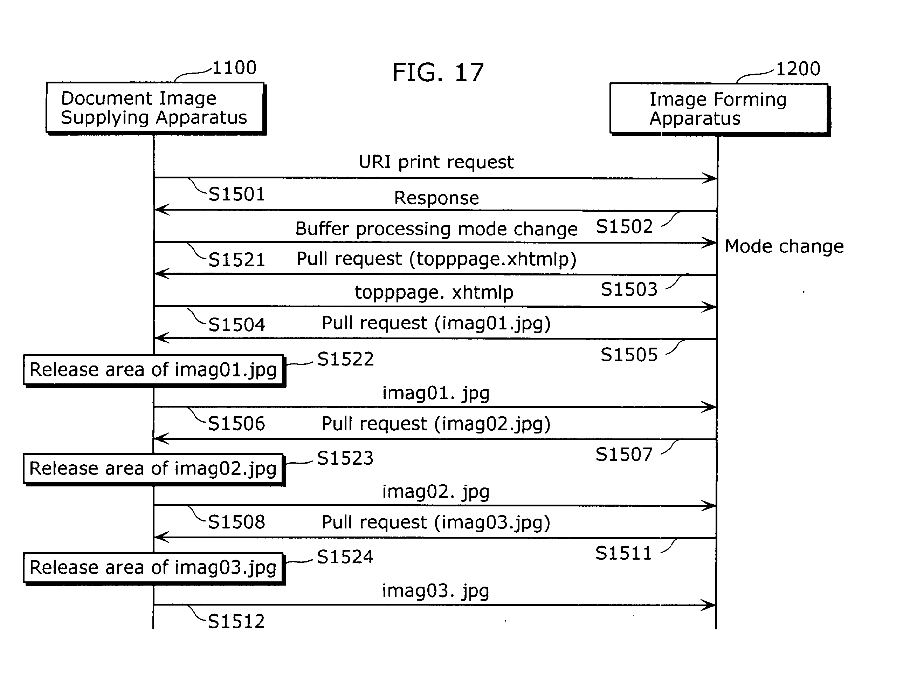

[FIG. 17] FIG. 17 is a diagram showing a communication sequence between the document image supplying apparatus and the image forming apparatus according to the first embodiment of the present invention.

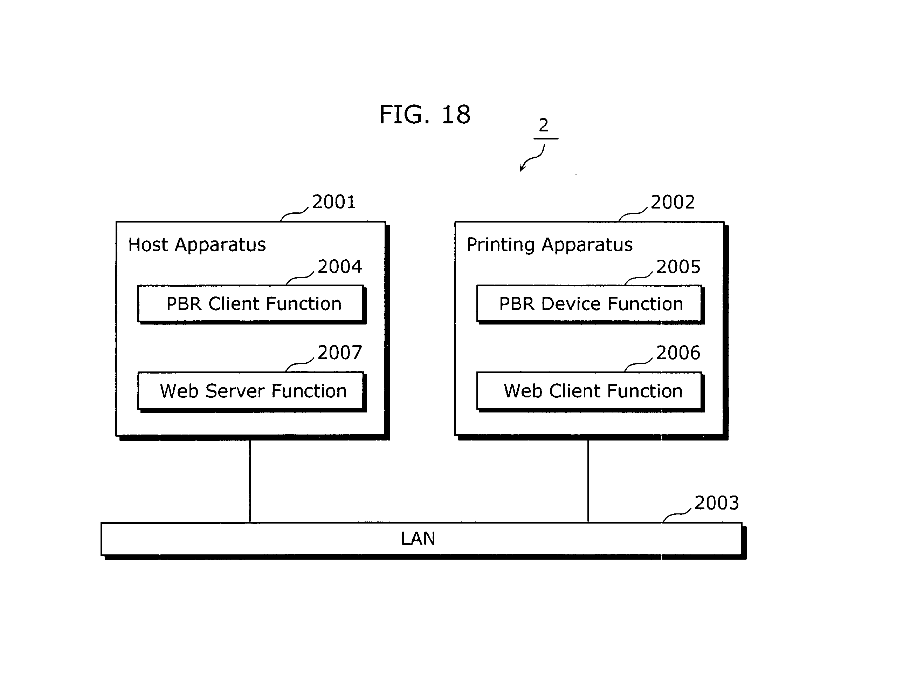

[FIG. 18] FIG. 18 is a system configuration diagram showing a network configuration according to the third embodiment of the present invention.

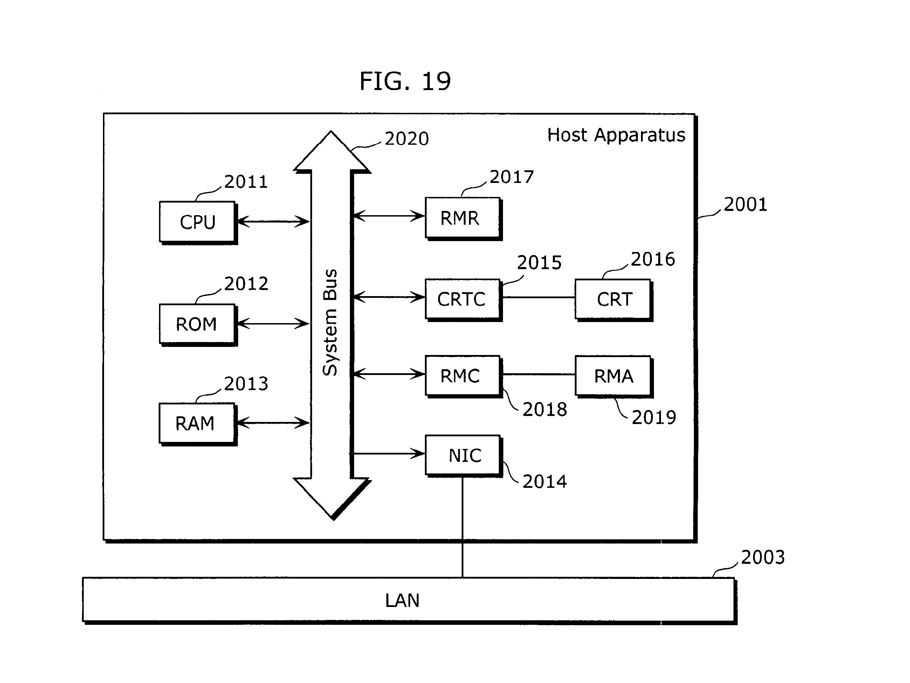

[FIG. 19] FIG. 19 is a block diagram showing a configuration of a host apparatus according to the third embodiment of the present invention.

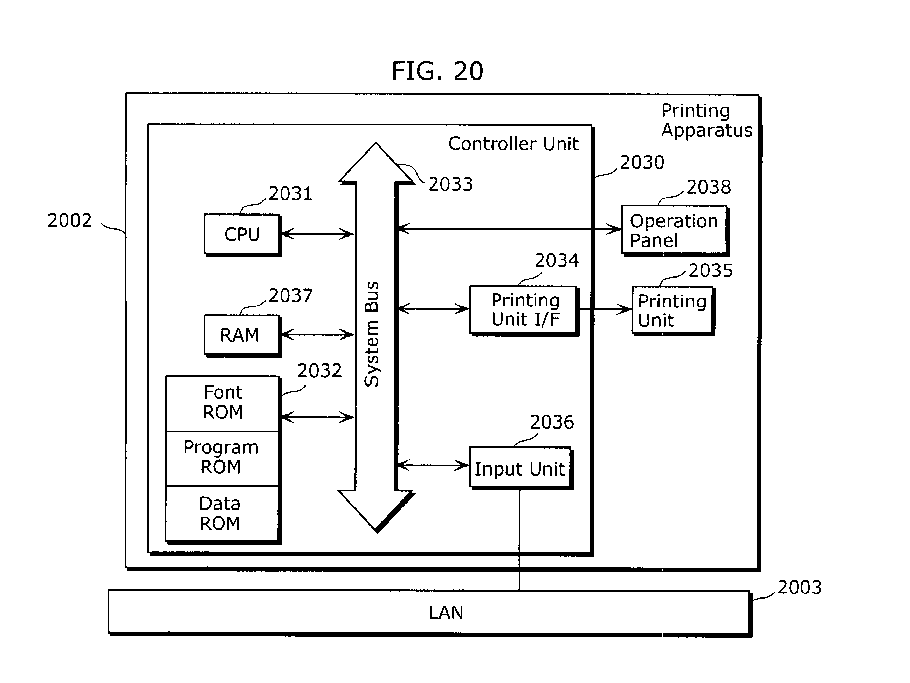

[FIG. 20] FIG. 20 is a block diagram showing a configuration of a printing apparatus according to the third embodiment of the present invention.

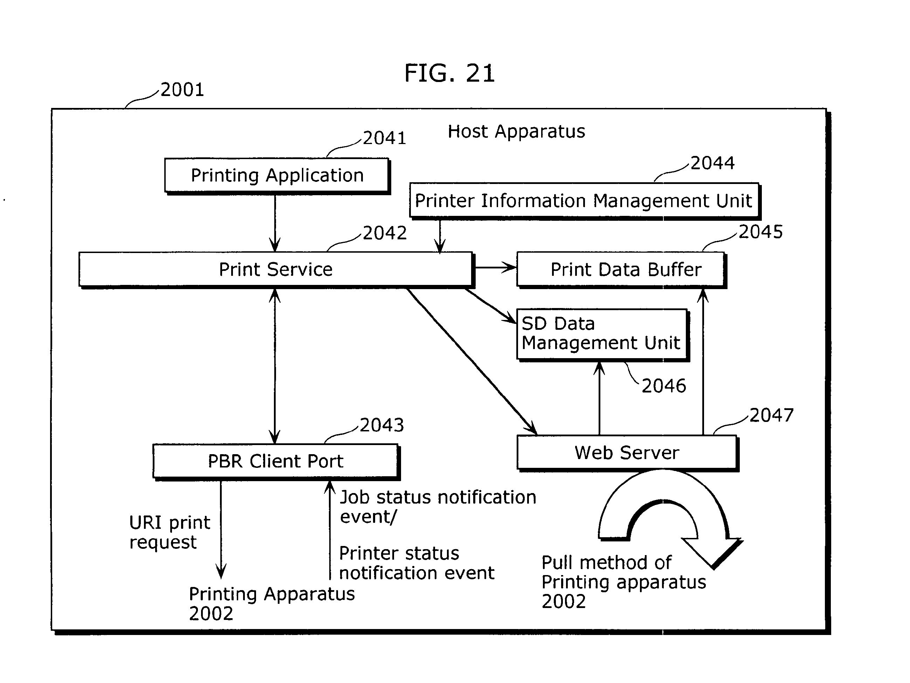

[FIG. 21] FIG. 21 is a diagram showing a functional configuration of the host apparatus according to the third embodiment of the present invention.

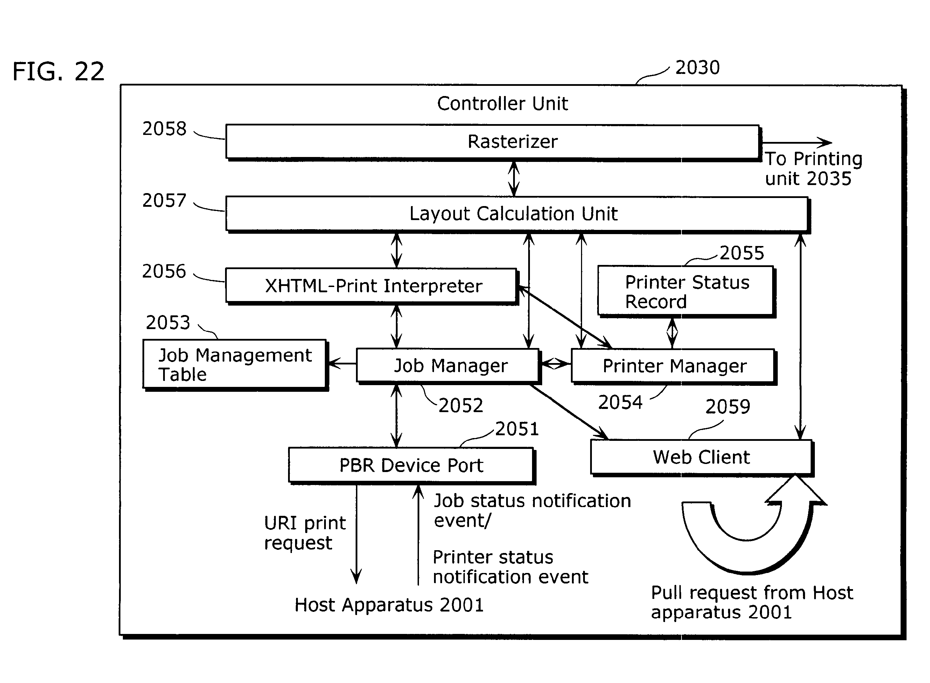

[FIG. 22] FIG. 22 is a diagram showing a functional configuration of the printing apparatus according to the third embodiment of the present invention.

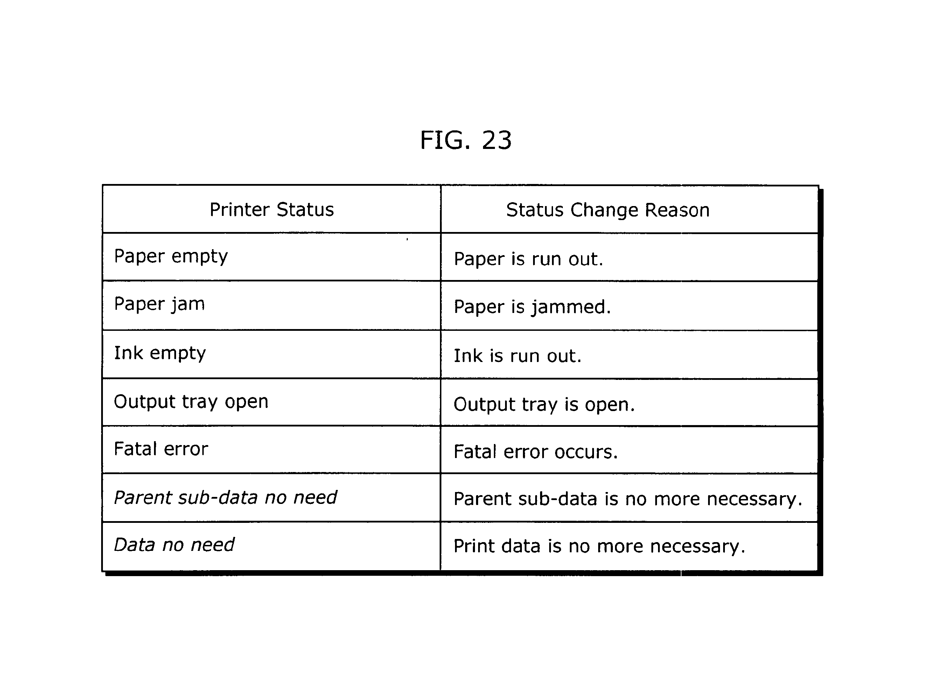

[FIG. 23] FIG. 23 is a diagram showing a definition table which defines a printer status according to the third embodiment of the present invention.

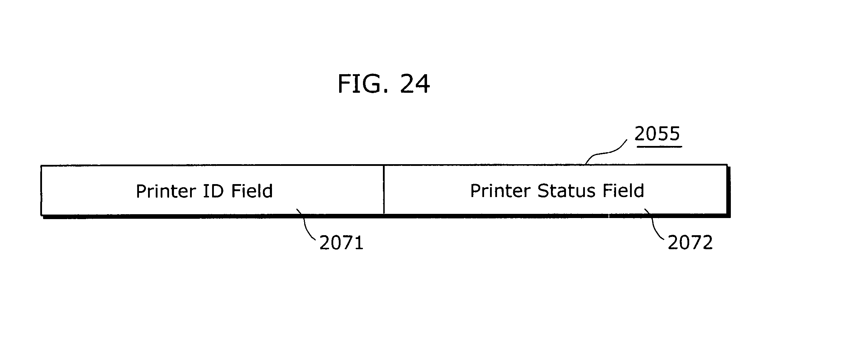

[FIG. 24] FIG. 24 is a diagram showing a field structure of the printer status record according to the third embodiment of the present invention.

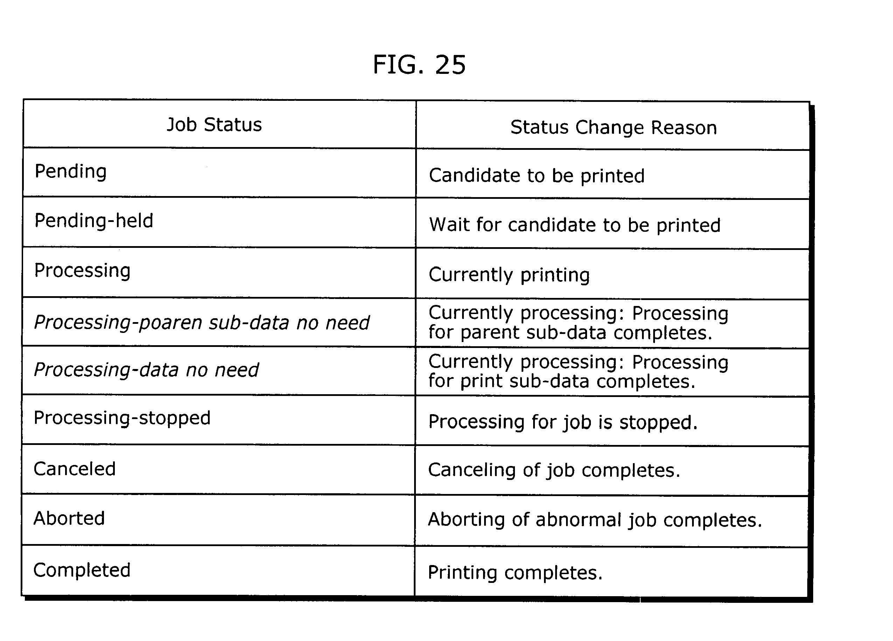

[FIG. 25] FIG. 25 is a diagram showing a definition table which defines a job status according to the third embodiment of the present invention.

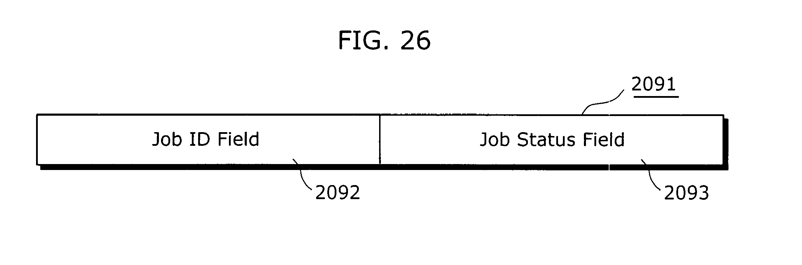

[FIG. 26] FIG. 26 is a diagram showing a filed structure of a job status record according to the third embodiment of the present invention.

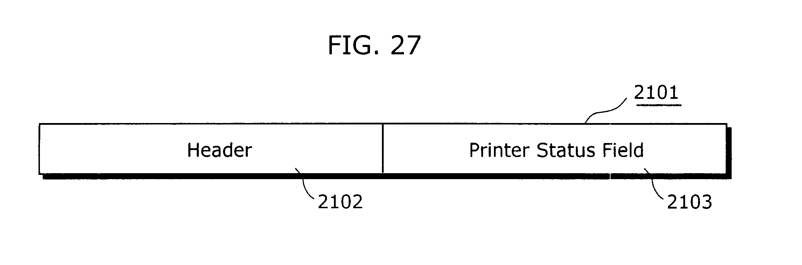

[FIG. 27] FIG. 27 is a diagram showing a filed structure of a printer status packet according to the third embodiment of the present invention.

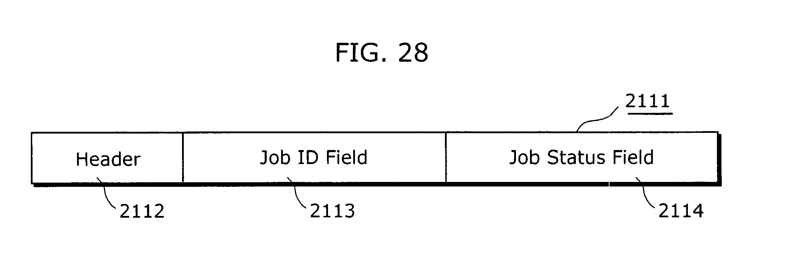

[FIG. 28] FIG. 28 is a diagram showing a filed structure of a job status packet according to the third embodiment of the present invention.

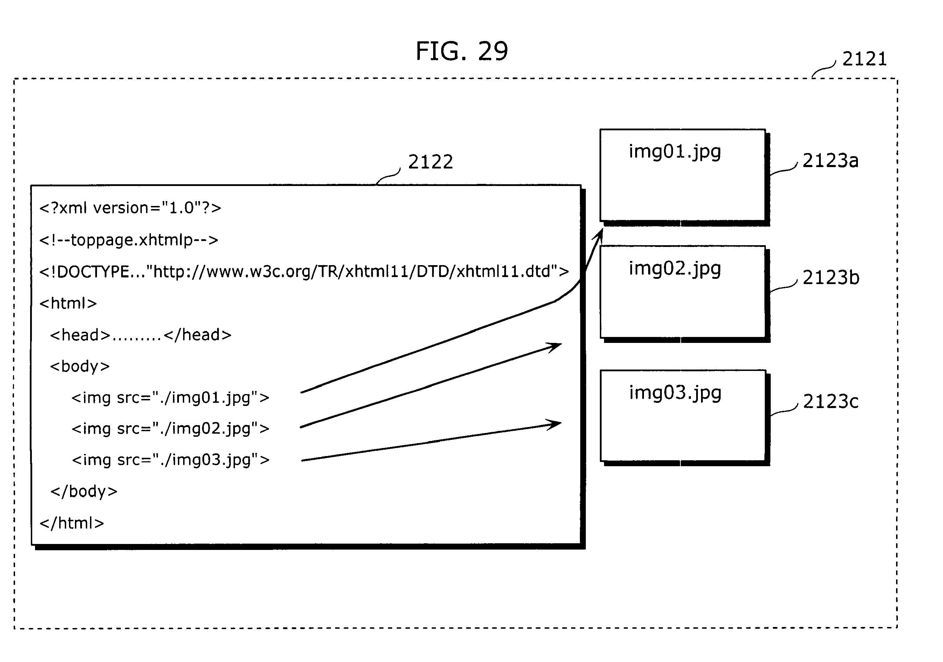

[FIG. 29] FIG. 29 is a diagram showing a structure of print data according to the third embodiment of the present invention.

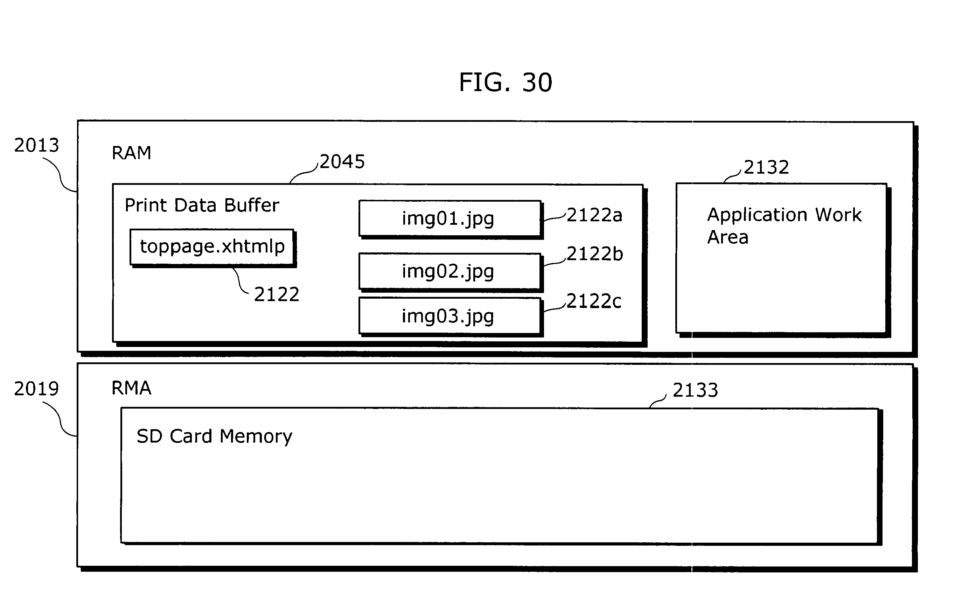

[FIG. 30] FIG. 30 is a diagram showing a place for storing the print data according to the third embodiment of the present invention.

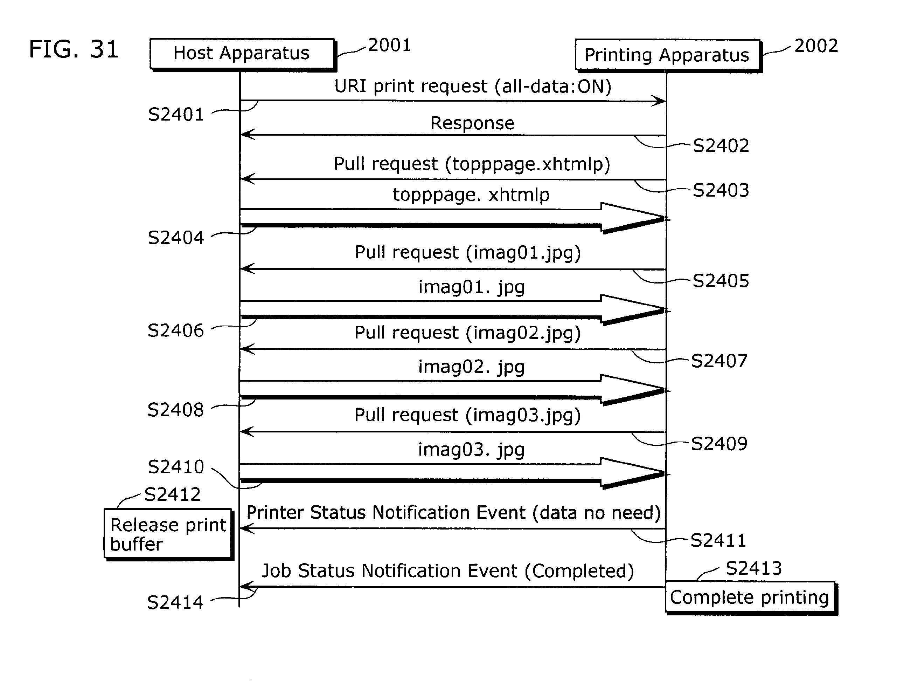

[FIG. 31] FIG. 31 is a diagram showing a communication sequence between a host apparatus and a printing apparatus according to the third embodiment of the present invention.

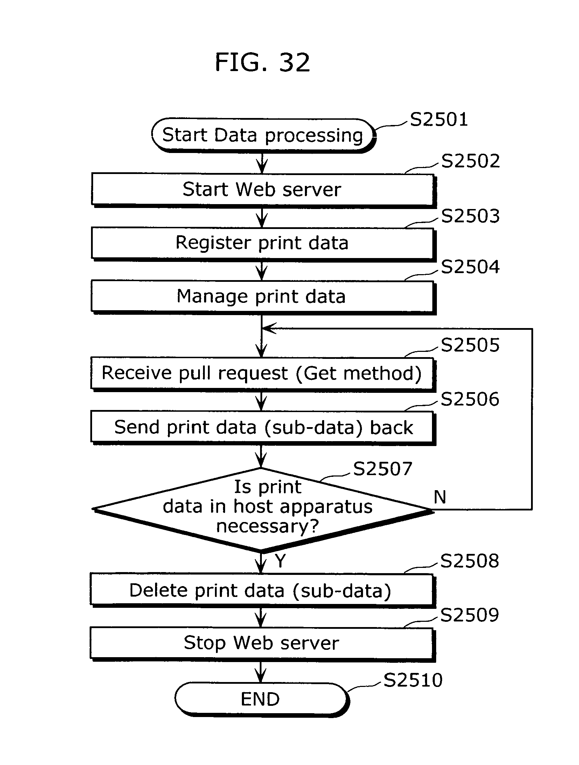

[FIG. 32] FIG. 32 is a flowchart showing data processing performed by the host apparatus according to the third embodiment of the present invention.

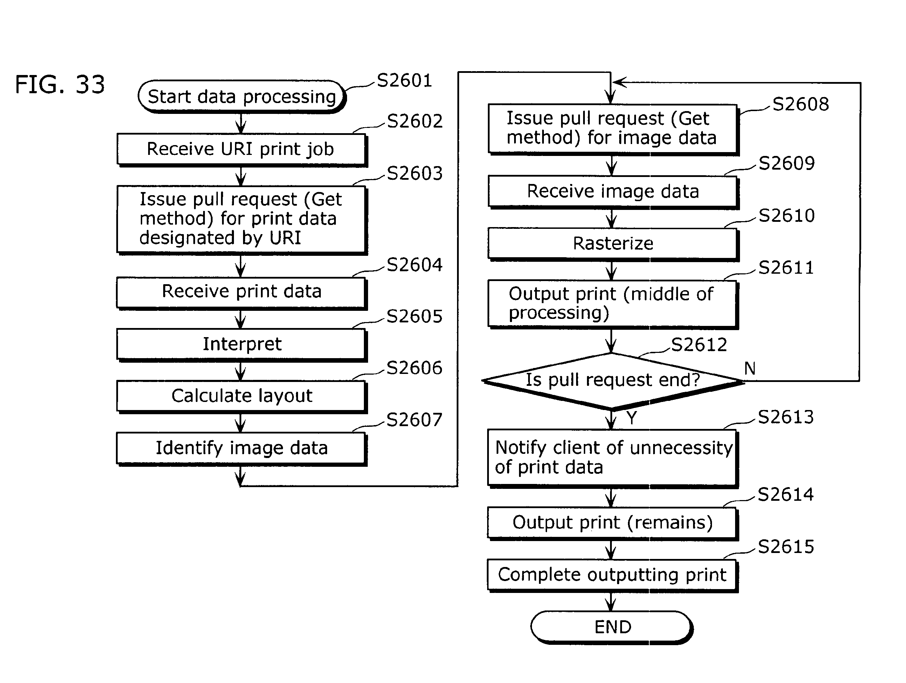

[FIG. 33] FIG. 33 is a flowchart showing data processing performed by the printing apparatus according to the third embodiment of the present invention.

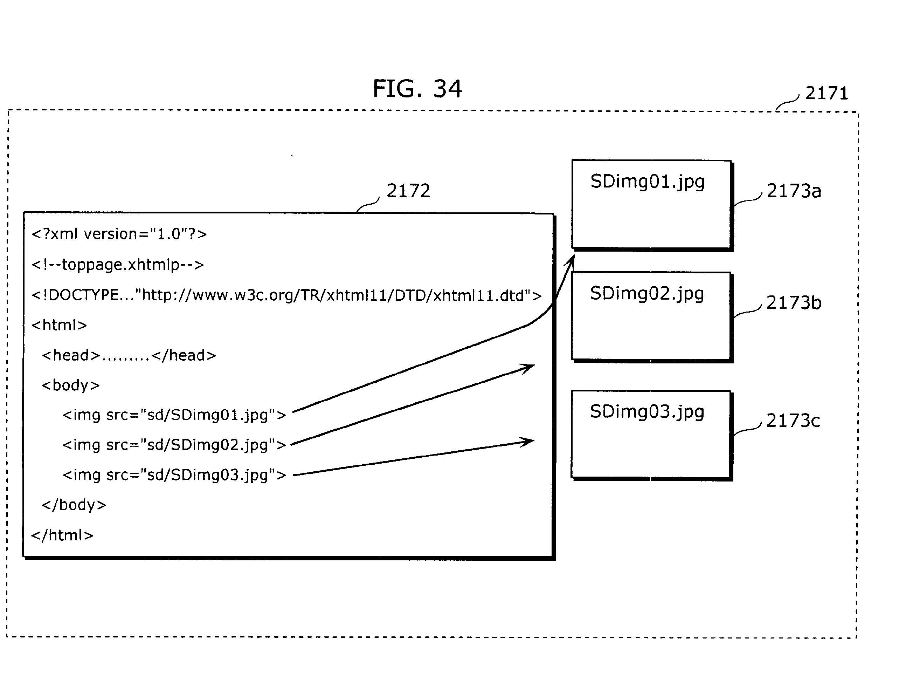

[FIG. 34] FIG. 34 is a diagram showing a structure of print data according to the fourth embodiment of the present invention.

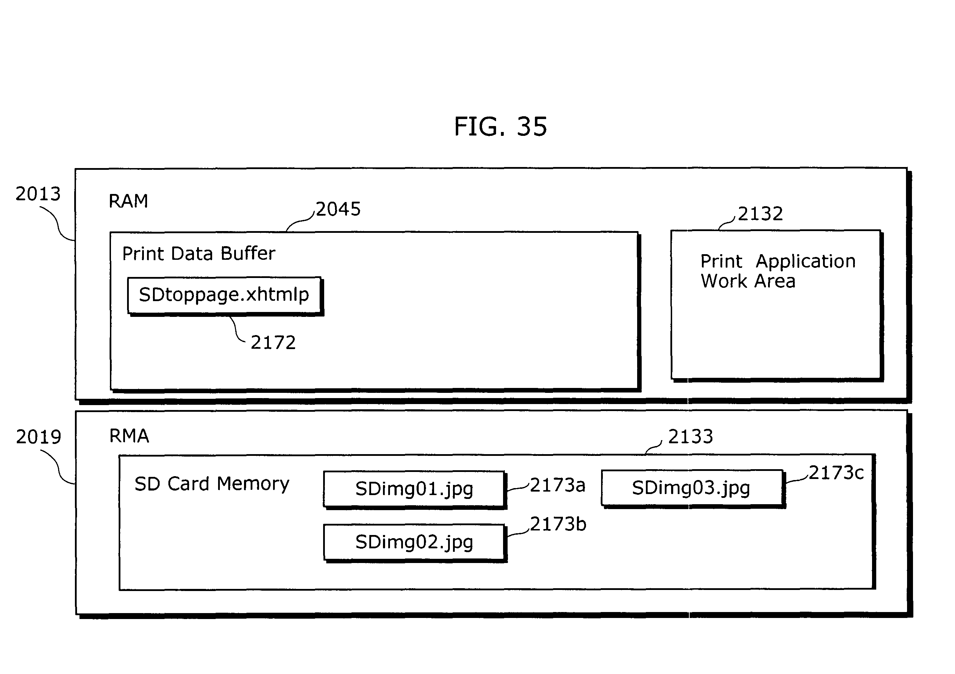

[FIG. 35] FIG. 35 is a diagram explaining a place for storing print data according to the fourth embodiment of the present invention.

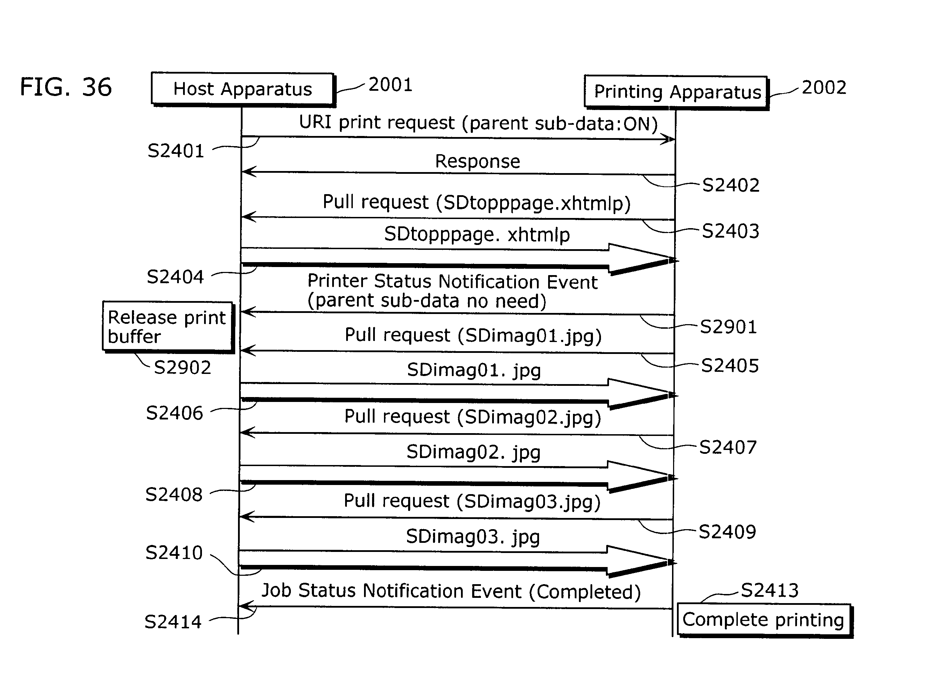

[FIG. 36] FIG. 36 is a diagram showing a communication sequence between a host apparatus and a printing apparatus according to the fourth embodiment of the present invention.

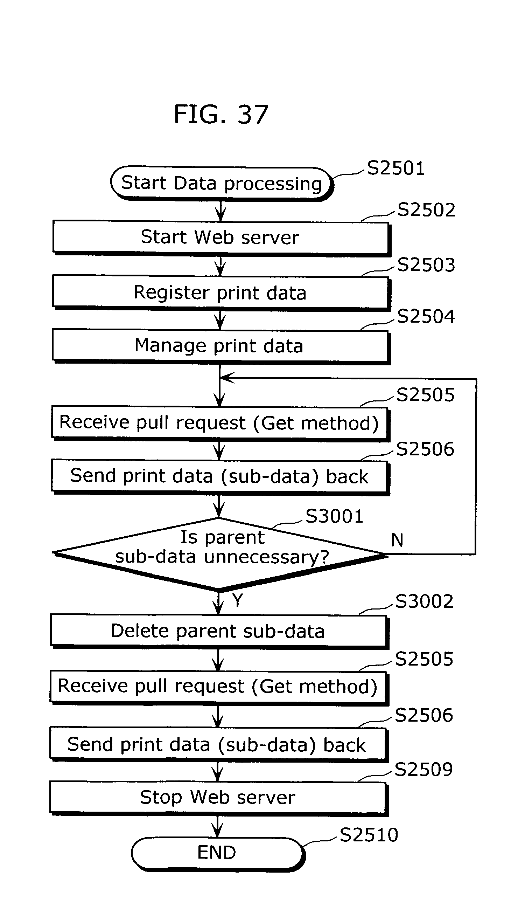

[FIG. 37] FIG. 37 is a flowchart showing data processing performed by the host apparatus according to the fourth embodiment of the present invention.

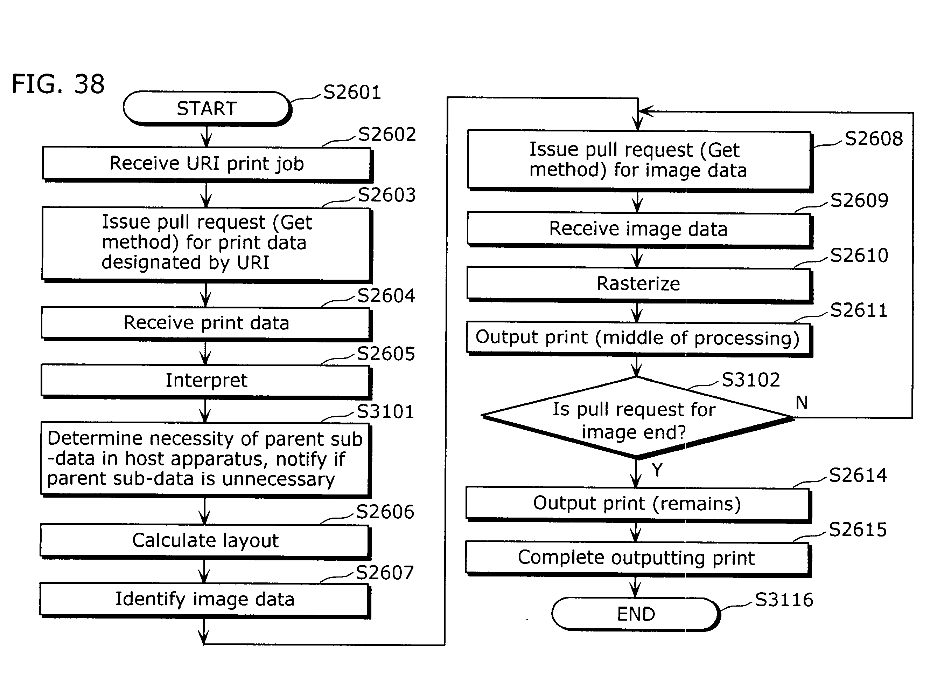

[FIG. 38] FIG. 38 is a flowchart showing data processing performed by the printing apparatus according to the fourth embodiment of the present invention.

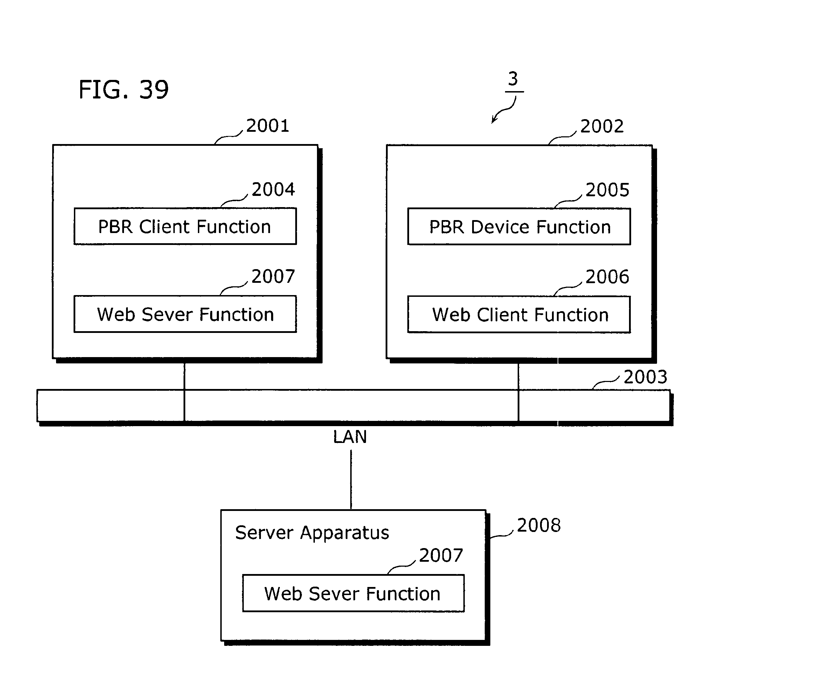

[FIG. 39] FIG. 39 is a system configuration diagram showing a network configuration according to the fifth embodiment of the present invention.

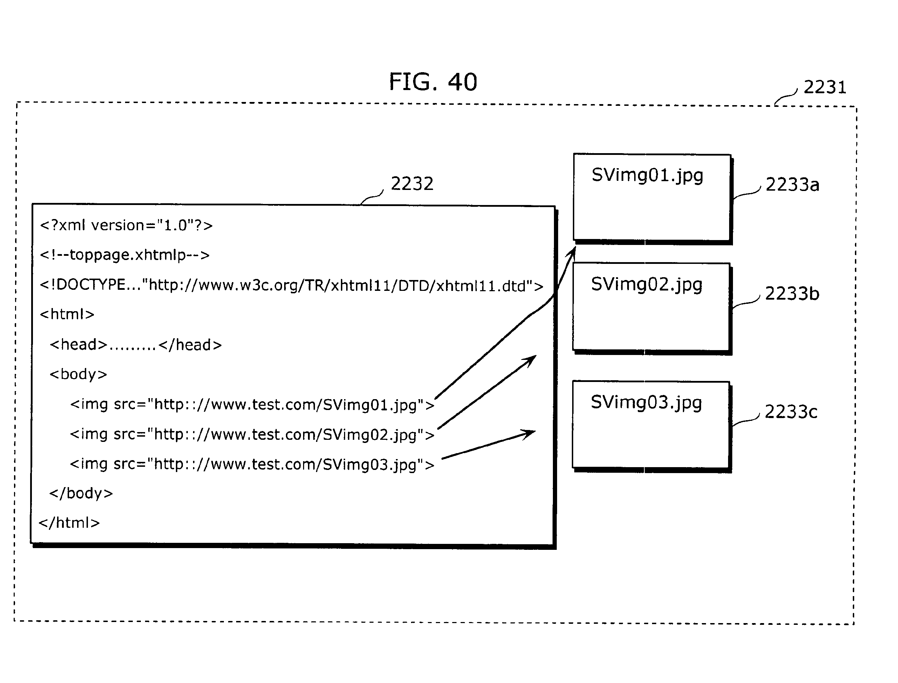

[FIG. 40] FIG. 40 is a diagram showing a structure of print data according to the fifth embodiment of the present invention.

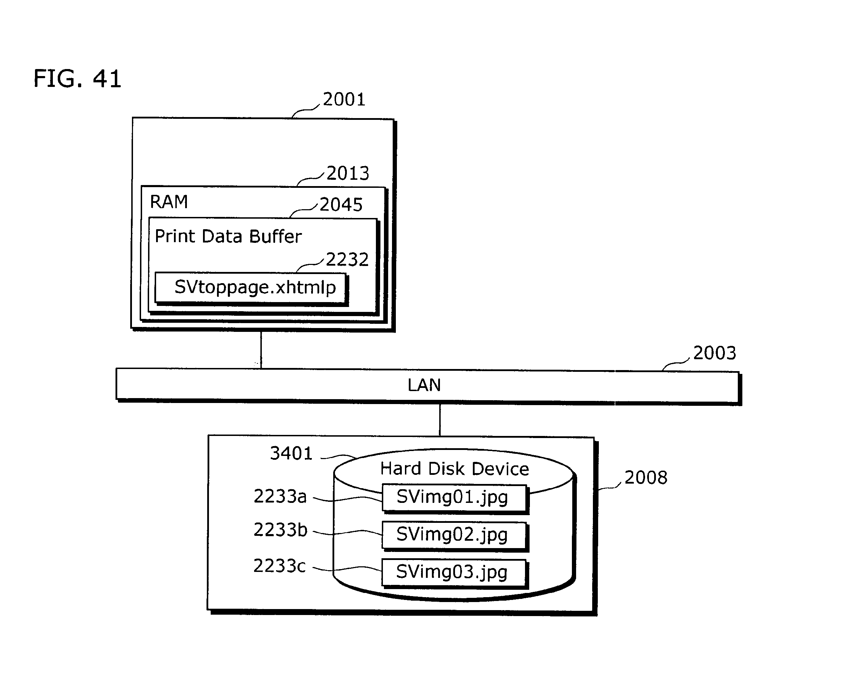

[FIG. 41] FIG.41 is a diagram explaining a place for storing print data according to the fifth embodiment of the present invention.

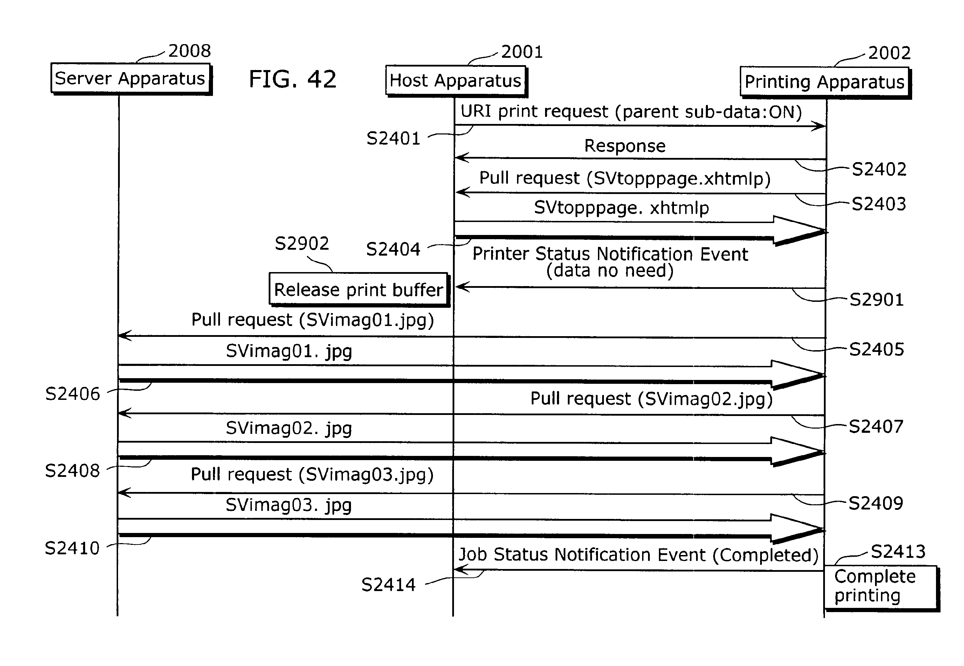

[FIG. 42] FIG. 42 is a diagram showing a communication sequence among a host apparatus, a server apparatus, and a printing apparatus, according to the fifth embodiment of the present invention.

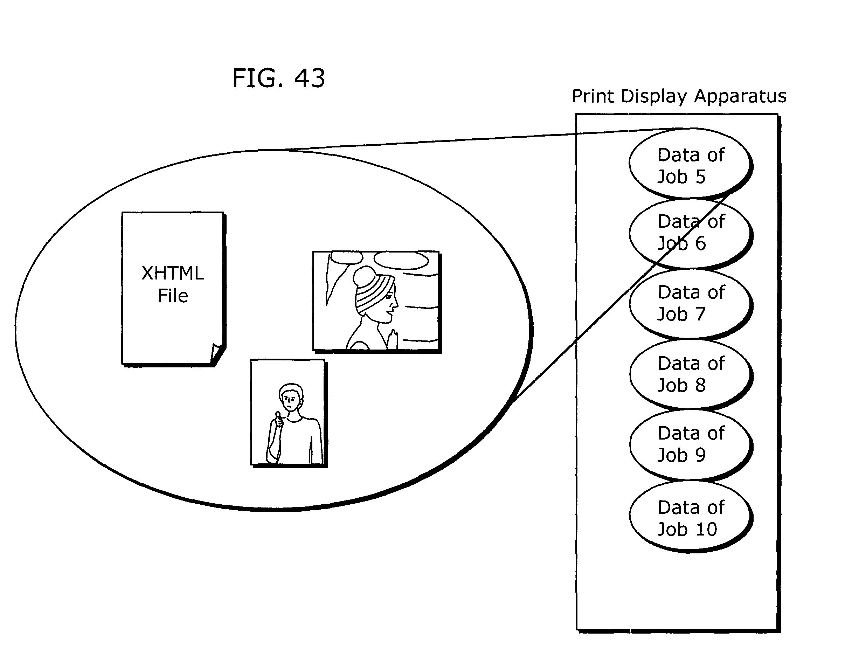

[FIG. 43] FIG. 43 is a diagram showing a situation where a print data buffer in a print instruction apparatus stores data of six print jobs (Job 5 to Job 10).

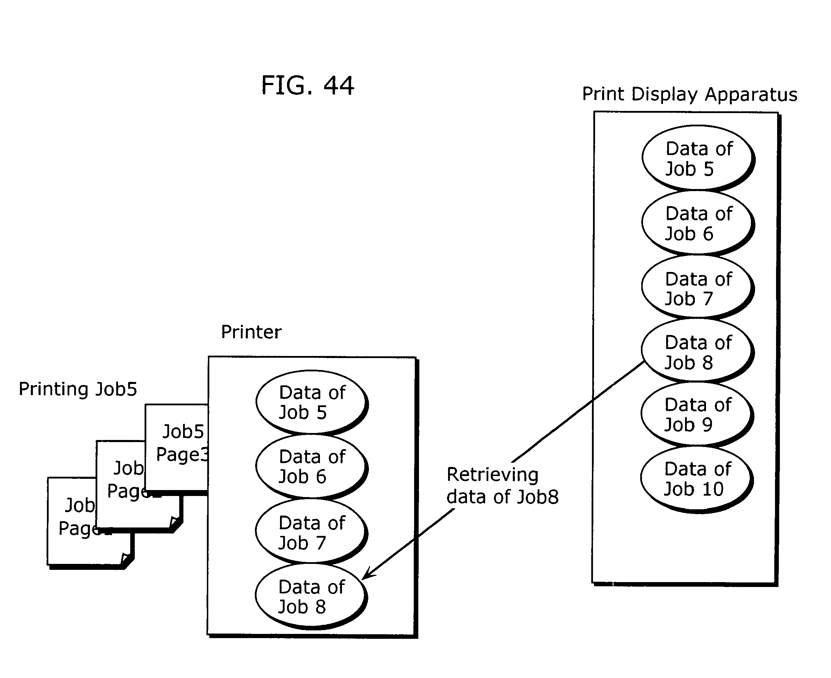

[FIG. 44] FIG. 44 is a diagram showing a situation of job management performed by a print instruction apparatus, and of retrieving of the job data performed by a printer.

### Numerical References

- 1,2,3: printing system
- 1100: document image supplying apparatus
- 1101: application
- 1102: conversion unit
- 1103: printer control unit
- 1104: communication I/F
- 1200: image forming apparatus
- 1300: transmission medium
- 1400: print document
- 1401 to 1403: image objects
- 1404: print description data
- 2001: host apparatus
- 2002: printing apparatus
- 2003: network
- 2004: PBR client function
- 2005: PBR device function
- 2006: Web client function
- 2007: Web server function
- 2008: server apparatus
- 2042: print service
- 2043: PBR client port
- 2045: print data buffer
- 2047: Web server
- 2051: PBR device port
- 2056: XHTML-print interpreter
- 2057: layout calculation unit
- 2059: Web client

### Best Mode for Carrying Out the Invention

The following describes embodiments of the present invention with reference to the drawings.

(First Embodiment)
FIG. 5 is a block diagram showing a whole configuration of a printing system according to the first embodiment of the present invention.

As shown in FIG. 5, a printing system 1 includes: a document image supplying apparatus 1100; an image forming apparatus 1200; and a transmission medium 1300 which connects the document image supplying apparatus 1100 with the image forming apparatus 1200 so that the document image supplying apparatus 1100 and the image forming apparatus 1200 can communicate with each other.

As the document image supplying apparatus 1100, a digital television set, a set-top box (STB), and the like can be used, and moreover, any other apparatuses which serve as sources of data can be also applied. Note also that, as the image forming apparatus 1200, a printer, a facsimile, or the like can be used. Note also that, as the transmission medium 1300, mediums used between a computer and a printer, such as a bus, a public network, a dedicated line, an Internet network, and the like, which can transmit data wirelessly or using cables, are used between, can be used. Note also that FIG. 5 shows an internal configuration of the document image supplying apparatus 1100 that is a digital television set (DTV), and also shows an internal configuration of the image forming apparatus 1200 that is a printer.

The document image supplying apparatus 1100 includes an application 1101, a conversion unit 1102, a printer control unit 1103, a print buffer 1105, and a communication I/F 1104.

The application 1101 creates print description data. The conversion unit 1102 converts a format of the print description data outputted from the application 1101, into a format of a link file having a hierarchical structure which the image forming apparatus 1200 can interpret (here, Extensible Hyper Text Markup Language (XHTML) is applied). The printer control unit 1103 interprets the print description data and issues a print job, and also manages a buffer for the print description data. The print buffer 1105 stores the print description data temporarily. The communication I/F 1104 serves as a connection interface for connecting to the transmission medium 1300.

Note that the print buffer 1105 is shown as being included in the document image supplying apparatus 1100, but the print buffer 1105 may exist in a different apparatus on the network, or the like, and may be used wherever the print buffer 1105 exists.

In the above configuration, firstly, when a user, by using the application 1101, performs editing and the like of print data and issues a print request, then the application outputs data which is necessary for the printing. Note that this application 1101 is a mailer, a Web browser or a BML browser, a DSC album which can edit data of a digital still camera, or the like. The conversion unit 1102 converts the data received from the application 1101, into a language which the printer can interpret, for example, a XHTML format. Note that when the print data is already the XHTML format, this conversion is not necessary. Thus, the converted print description data is given to the printer control unit 1103 and stored into the print buffer 1105. Here, an image object or the like which is linked to the print description data is converted by the conversion unit 1102 into data of a format (JPEG or PNG format, for example) which the image forming apparatus 1200 can print, and copied from a source where the data has existed originally, onto the print buffer 1105. Note that the above-mentioned source may exist anywhere, inside or outside the document image supplying apparatus 1100. Note also that, when the data is already data which the image forming apparatus 1200 can print, the conversion is, of course, also unnecessary.

Note that, as this print buffer 1105, a memory and a hard disk drive (HDD) in the document image supplying apparatus 1100 can be used. For example, when the document image supplying apparatus 1100 is a digital television set, a part of a storage means, such as a memory, which the digital television has as a basic function, can be used.

The image forming apparatus 1200 includes a printer engine 1201, and a rasterizer 1202, and an interpreter 1203, and a communication I/F 1204.

The printer engine 1201 prints a print document on a recording paper or the like. The rasterizer 1202 develops the print document into raster data indicating collection of small dots. The interpreter 1203 analyzes the print description data (top page) which is parent sub-data included in the print document, and outputs a transfer request for an image object which is child sub-data included in the print document and which the rasterizer 1202 needs, to the document image supplying apparatus 1100. The communication I/F 1204 transmits and receives, via the transmission medium 1300, the above-mentioned print description data, image object, transfer request, and the like.

Here, when the print document 1400 shown in FIG. 6 is to be printed, data which the application 1101 manages is converted into print description data which is described in a language (here, a XHTML format that is a so-called ML format) that is able to be processed by a printer 200P shown in FIG. 7, while objects that are linked to the data which the application 1101 manages are converted into print objects, such as displayable image objects (JPEG, PNG, or the like), and the converted print description data and the converted print objects are accumulated into the print buffer 1105. Print data refers sometimes to the print description data, and sometimes to the print object.

In a case of the print document 1400 of FIG. 6, as an example, the print document 1400 includes print description data 1404 and three image objects 1401, 402, and 403, and the image objects 1401 and 403 are linked to an identical image object. The print description data 1404 is sub-data (parent sub-data) which indicates a top page of the print document 1400, and transferred, in a response to a request from the image forming apparatus 1200, from the communication I/F 1104 of the document image supplying apparatus 1100, to the communication I/F 1204 of the image forming apparatus 1200. When the print description data 1404 is received, the interpreter 1203 analyzes the print description data 1404, and outputs transfer requests of the image objects 1401, 1402, and 1403 which the rasterizer 1202 needs, to the document image supplying apparatus 1100. Further, in the analyzing of the print description data 1404, the interpreter 1203 determines whether or not the image objects 1401, 1402, and 1403 need to be obtained again in order to complete printing of the image objects 1401,1402, and 1403.

When the printer engine 1201 perform printing according to the print description data 1404 which indicates the print document 1400, the rasterizer 1202 perform rasterizing along arrows 1451 to 1461 shown in FIG. 8, sequentially from a top. When an area of the arrows 1451 to 1454 is to be rasterized, the image object 1401 is necessary, so that, immediately prior to rasterizing of the arrow 1451, the rasterizer 1202 issues a transfer request for the image object 1401 to the document image supplying apparatus 1100, and receives the image object 1401. Next, when an area of the arrows 1455 to 1457 is to be rasterized, the image object 1402 is necessary, so that, immediately prior to rasterizing of the arrow 1455, the rasterizer 1202 issues a transfer request for the image object 1402 to the document image supplying apparatus 1100, and receives the image object 1402. Next, when an area of the arrows 1458 to 1461 is to be rasterized, the image object 1403 is necessary, but, since the image object 1403 is the same object as the image object 1401, the image object 1401 becomes necessary again, so that a transfer request for the image object 1401 is issued again to the document image supplying apparatus 1100, then the image object 1401 is received, and eventually rasterizing of the arrows 1458 to 1461 starts.

Note that, for rasterizing of the image object 1403, when the image forming apparatus 1200 has a cache memory and the cache memory holds the image object 1401, it becomes, of course, unnecessary to issue the transfer request for the image object 1401 to the document image supplying apparatus 1100.

For the print document 1400 of FIG. 6, regarding the image object 1401 (front.jpg), the request is to be issued twice from the image forming apparatus 1200 to the document image supplying apparatus 1100, so that if the image object 1401 is deleted from the print buffer 1105 when the first transfer is completed, the document image supplying apparatus 1100 cannot respond to the second transfer request, which means that it is impossible to set a timing of deleting the print data from the print buffer 1105, as to a time when the image forming apparatus 1200 notifies the document image supplying apparatus 1100 of the completion of the transfer.

Therefore, regarding an object related to the print document 1400, in the image forming apparatus 1200, using processing as shown in FIG. 9, the rasterizer 1202 or the interpreter 1203 notifies the document image supplying apparatus 1100, of unnecessity of the print object.

Firstly, the interpreter 1203 analyzes the print description data 1404 which is transferred from the document image supplying apparatus 1100 (S1101). Subsequently, the rasterizer 1202 prepares rasterizing (S1102), and determines whether or not data of a print object linked to the print description data 1404 is necessary (S1103).

If the data of the print object is necessary, then the rasterizer 1202 issues a transfer request to the document image supplying apparatus 1100 (S1104), and receives the data of the print object (S1105). Subsequently, this received data of the print object is rasterized (S1106). On the other hand, at the above Step S1103, if a transfer request for the print object is no longer necessary, then the rasterizer 1202 rasterizes data of the received print object (S1106). After the rasterizing (S1106), a determination is made as to whether or not the rasterized data is an end of the print document (completion of the rasterizing of the print document) (S1107). If the rasterized data is not the end of the print document and rasterizing needs to be further performed, then a determination is made as to where or not a transfer request for the print object which has been received, needs to be further issued (S1108). If a transfer request for the received print object is no longer necessary, notification indicating that the print object is no longer necessary is sent to the document image supplying apparatus 1100 (S1109).

Note that, when the unnecessity of the print object is notified, the information, which is used to identify the unnecessary object, may be a full path of the print object, or a combination of information for identifying the print job, such as a print job ID, included in the object, and a relative path. Moreover, any information can be applied as far as the print object can be identified. Note also that, a timing of notifying the unnecessity of print object may be set to a timing when a print object whose transfer is no longer requested can be stored into a print buffer (not shown).

Then, the determination at the Step S1108 is made depending on whether or not the print data is to be still referred in the top page, and if the print data is no longer referred in the top page, then the determination is made that a further transfer request for the print data is no longer necessary. Thereby, it is possible to completely prevent from an occurrence of an overhead and from too long keeping of the print data, and at the same time able to promptly release the print buffer.

On the other hand, the document image supplying apparatus 1100, as shown in FIG. 10, includes: Step S1201 for creating print data; Step S1202 for storing the print data into the print buffer; Step S1203 for issuing a print job; Step S1204 for determining whether or not received information from the image forming apparatus is a transfer request for the print data; Step S1205 for determining whether or not the received information from the image forming apparatus is a notification of unnecessity of the print data, when the received information is not the transfer request for the print data; Step S1206 for determining whether or not the received information from the image forming apparatus is a notification of completion of the print job, when the received information is not the notification of unnecessity of the print data; Step S1207 for transferring the print data stored in the print buffer 1105 to the image forming apparatus 1200, when the received information is the transfer request for the print data; and Step S1208 for releasing a storage area of the print data in the print buffer 1105, when the received information is the notification of unnecessity of the print data, and when the document image supplying apparatus 1100 receives the notification of unnecessity, the document image supplying apparatus 1100 can release the area storing the print data from the print buffer 1105, using the Step S1205 for determining whether or not the received information from the image forming apparatus is the notification of unnecessity of the print data and the Step S1208 for releasing the storage area for the print data in the print buffer 1105 when the received information is the notification of unnecessity of the print data.

FIG. 11 is a diagram of a sequence performed between the document image supplying apparatus 1100 and the image forming apparatuses 1200, when the print document 1400 is printed.

The application 1101 and the conversion unit 1102 in the document image supplying apparatus 1100 create the print description data 1404 and the image objects 1401 to 1403, which are included in the print document 1400, and store the print description data 1404 and the image objects 1401 to 1403 into the print buffer 1105. The application 1101 requests the printer control unit 1103 to issue a request for printing.

The printer control unit 1103 registers the print description data 1404 and the image objects 1401 to 1403 into an internal management database and manages the print description data 1404 and the image objects 1401 to 1403. Then, the printer control unit 1103 requests a PBR client port (not shown in the figure) to issue a URI print request to the image forming apparatus 1200. When the PBR client receives the request, the PBR client sends, via the communication I/F 1104 to the image forming apparatus 1200, the URI print request (S1501).

Here, by the URI print request, to the image forming apparatus 1200 is sent a request for presenting the followings:
- a URL which designates the print data; and
- print conditions,
   as well as
- printer status information which is to be presented when the print data stored in the document image supplying apparatus 1100 becomes no longer necessary.
In the first embodiment, the print description data 1404 is designated by the URL. Transmission of the URI print request and receiving of the response to the URI print request are performed by the PBR client port.

When a job manager (not shown) in the image forming apparatus 1200 receives the URI print request, the job manager issues a job, and creates a job status record corresponding to the issued job and registers detail of the print request into a job management table. After the registering, a PBR device port sends back a response to the URI print request (S1502).

Then, a printer manager (not shown) sets an internal status, so that when a printer status became a "data no need" status, the document image supplying apparatus 1100 executes a printer status notification event.

Next, the job manager instructs a Web client to download the print data (actually, the print description data 1404) which is designated by the URL in the URI print request, and the Web client transmits a pull request "pull request (topppage.xhtmlp)" to the document image supplying apparatus 1100 (S1503).

When the printer control unit 1103 in the document image supplying apparatus 1100 receives the pull request, the printer control unit 1103 retrieves the print description data 1404 (toppage.xhtmlp) from the print buffer 1105, and sends the print description data 1404 to the image forming apparatus 1200 as a response (S1504).

When the Web client in the image forming apparatus 1200 receives the print description data 1404, the Web client transfers the image forming apparatus 1200 via the job manager to the interpreter 1203, and the interpreter 1203 interprets the print description data 1404 and converts the print description data 1404 into a document object model (DOM) tree indicating a structure of the document, and then gives the DOM tree to a layout calculation unit (not shown). The layout calculation unit performs layout calculation using the DOM tree, and identifies the image objects 1401 to 1403 which are referred in the print description data 1404.

Next, the layout calculation unit instructs the Web client to download firstly the image object 1401 (front.jpg), and the Web client transmits, via the communication I/F 1204 to the document image supplying apparatus 1100, a pull request "pull request (front.jpg)" (S1505).

When the printer control unit 1103 in the document image supplying apparatus 1100 receives the pull request, the printer control unit 1103 retrieves the image object 1401 (front.jpg) from the print buffer 1105, and transmits the retrieved image object 1401 via the communication I/F 1104 to the image forming apparatus 1200 (S1506).

When the image object 1401 (front.jpg) is received, the receiving Web client transfers the image object 1401 to the layout calculation unit, and the layout calculation unit makes the rasterizer 1202 perform rasterizing to create output data to be outputted to the printer engine 1201. After creating the output data, the rasterizer 1202 transmits the output data to the printer engine 1201, and the printer engine 1201 prints the image object 1401.

After printing the image object 1401, next, the layout calculation unit instructs the Web client to download the image object 1402 (side.jpg), and the Web client transmits, via the communication I/F 1204 to the document image supplying apparatus 1100, a pull request "pull request (side.jpg)" (S1507). Note that the image object 1401 (front.jpg) is to be used again for the printing, so that a notification of unnecessity of the object (front.jpg) is not transmitted.

When the printer control unit 1103 in the document image supplying apparatus 1100 receives the pull request, the printer control unit 1103 retrieves the image object 1402 (side.jpg) from the print buffer 1105, and transmits the retrieved the image object 1402 via the communication I/F 1104 to the image forming apparatus 1200 (S1507).

When the image object 1402 (side.jpg) is received, the same processing as described for the case of the image object 1401 (front.jpg) is performed, and the printer engine 1201 prints the image object 1402. Then, since the image object 1402 (side.jpg) is not to be used again for the printing, the rasterizer 1202 or the interpreter 1203 transmits, via the communication I/F 1204, a notification of unnecessity of the object (side.jpg) (S1509).

Note that this notification of unnecessity is transmitted as a printer status notification event in which a status value "data no need" is indicated in a printer status field of the printer status record.

When the printer status notification event is received, the printer control unit 1103 determines, based on the event "data no need", that the image object 1402 stored in the print buffer 1105 can be deleted, and releases a memory area where the image object 1402 is stored in the print buffer 1105 (S1509).

After transmitting the notification of unnecessity of the object, next, the layout calculation unit instructs the Web client to download the image object 1403 (front.jpg), and the Web client transmits, via the communication I/F 1204 to the document image supplying apparatus 1100, a pull request "pull request (front.jpg)" (S1511).

When the printer control unit 1103 in the document image supplying apparatus 1100 receives the pull request, the printer control unit 1103 retrieves the image object 1403 (front.jpg) from the print buffer 1105, and transmits the retrieved the image object 1403 via the communication I/F 1104 to the image forming apparatus 1200 (S1512).

When the image object 1403 (front.jpg) is received, the printer engine 1201 prints the image object 1402. Then, since the image object 1403 (front.jpg) is not to be used again for the printing, the rasterizer 1202 or the interpreter 1203 transmits, via the communication I/F 1204, a notification of unnecessity of the object (front.jpg) (S1513).

When the printer status notification event is received, the printer control unit 1103 determines, based on the event "data no need", that the image object 1403 stored in the print buffer 1105 can be deleted, and releases a memory area where the image object 1403 is stored in the print buffer 1105 (S1514). Then, a determination is made that the print description data 1404 can be also deleted, and an area where the print description data 1404 is stored is released, so that, since a service of transferring the pint data is no longer necessary, the Web server is stopped.

After preveious printing, the layout calculation unit in the image forming apparatus 1200 has the printer engine 1201 print data via the rasterizer 1202, and complete printing of the print document 1400. Then, the interpreter 1203 or the rasterizer 1202 requests the PBR device port to transmit a job status packet in which "completed" is written in a job status field, to the document image supplying apparatus 1100, and the PBR device port transmits the job status packet to the document image supplying apparatus 1100. When the document image supplying apparatus 1100 receives this job status packet, the document image supplying apparatus 1100 is notified of that the image forming apparatus 1200 completes printing of the print document 1400.

With the above configuration and processing, prior to the printing completion of the print document, the image forming apparatus 1200 notifies the document image supplying apparatus 1100 of the unnecessity of the print data, so that the document image supplying apparatus 1100 can promptly release the print buffer 1105 without causing an overhead, and can efficiently use the print buffer 1105 even if a capacity of the buffer is little, in order to complete a print job.

Note that, if the document image supplying apparatus 1100 is a mobile apparatus, such as a mobile telephone, prior to receiving of the print completion notification from the image forming apparatus 1200, the document image supplying apparatus 1100 can be disconnected from the image forming apparatus 1200, so that an effect of shortening a connection time is also achieved, which means that the present invention is quite advantageous to mobile apparatuses.

(Second Embodiment)
Next, a printing system according to the second embodiment of the present invention is described. Note that configuration of this printing system is the same as the configuration of the printing system 1 shown in FIG. 5 in the first embodiment, so that the configuration of this system is not shown in the drawings.

In the meantime, in the above-described first embodiment, it has been described as an example that the print document 1400 shown in FIG. 6, namely, an identical object, is used twice, but in a printing system using the pull method, a print document 1500 shown in FIG. 12 may be used.

The print document 1500 of FIG. 12 includes a print description data and a single image object 1501, and depending on a memory capacity of the print buffer 1105, it is necessary, as shown in FIG. 13, to divide the image object 1501 into image objects 1511 to 1513 for example, and to sequentially store the image objects 1511 to 1513 into the print buffer 1105 firstly from an image object whose priority of printing is higher.

FIG. 14 is a diagram showing an example of a structure of print description data 514 which indicates the print document of FIG. 13.

In a case where the print document 1500 as shown in FIG. 13 is to be printed, it is possible to release the print buffer 1105 when the document image supplying apparatus 1100 described in the first embodiment receives a notification of unnecessity, but in the processing shown in FIG. 10, at a stage of the Step S1204 in which the document image supplying apparatus 1100 issues a print job, it is certain that each of the image objects 1511 to 1513 appears only once in the print document 1500, so that receiving of each notification of unnecessity is not necessary. Therefore, the printing system according to the second embodiment has a processing mode in which, if it is previously certain that image objects are used only once, the document image supplying apparatus 1100 and the image forming apparatus 1200 do not perform a further transfer request for the received image objects again, and also skip notification of unnecessity.

More specifically, in such a case, in the image forming apparatus 1200, as shown in FIG. 15, at an internal processing mode change step S1301, using information of the print job received from the document image supplying apparatus 1100, switches to a processing mode in which, the received image objects are no longer requested to be transferred, and then skips notifications of unnecessity.

On the other hand, the document image supplying apparatus 1100, as shown in FIG. 16, has a transferred print data release step S1402, in which, when any one of the application 1101, the conversion unit 1102, and the printer control unit 1103 finds, in creating print data, that each of print objects appears only once, the finding unit, at a buffer processing mode change step S1401, changes a timing of releasing the print buffer, from after receiving a notification of unnecessity to on receiving a transfer request for print object, so that when a print object transfer request is received from the image forming apparatus 1200, a buffer area is released if the buffer stores the transferred print data.

FIG. 17 is a diagram showing a sequence performed between the document image supplying apparatus 1100 and the image forming apparatus 1200, when the print document 1500 is printed. Note that, also here, the same processing are designated by the same Step numerals of the processing for printing the print document 1400 shown in FIG. 11, and detail of those steps are not described again below.

With the above configuration and processing, when the print document 1500 having the configuration as shown in FIG. 13 is printed, it is possible, by using a method which is simpler and whose communication amount is less as compared to the first embodiment, to prevent occurrence of an overhead and to promptly and completely control releasing of a memory in the print buffer.

Note that examples of the notifying method of the buffer processing mode (the change of the internal processing mode of the image forming apparatus 1200) from the document image supplying apparatus 1100 to the image forming apparatus 1200 according to the second embodiment are: a method of including the buffer processing mode in a print job; a method of notifying the buffer processing mode as a command, after a connection for print job execution is established between the document image supplying apparatus 1100 and the image forming apparatus 1200; a method of describing the buffer processing mode in print description data or a print object; and the like.

Note that the second embodiment has described that, after releasing print data (S1402, S1522, S1523, S1524), next print data is transferred (S1207, S1506, S1508, S1512), but this order may be inverse.

With the above configuration and processing, by performing the processing mode notification regarding the print buffer 1105 from the document image supplying apparatus 1100 to the image forming apparatus 1200, the document image supplying apparatus 1100 can learn a timing for releasing the print buffer 1105, so that it is possible to efficiently use the print buffer 1105 even if a capacity of the buffer is little, and to complete the print job.

(Third Embodiment)
Next, a printing system according to the third embodiment of the present invention is described.

FIG. 18 is a diagram showing a whole configuration of a printing system according to the third embodiment of the present invention.
The printing system 2, as shown in FIG. 18, includes: a host apparatus 2001; a printing apparatus 2002; and a network 2003 which connects the host apparatus 2001 and the printing apparatus 2002. Here, the present invention relates to communication and management of print data, so that FIG. 18 also shows locations of communication functions.

The host apparatus 2001 includes a PBR client function 2004 and a Web server function 2007.

The printing apparatus 2002 includes a PBR device function 2005 and a Web client function 2006.

The PBR client function 2004 provides a client communication function using the Print-by-Reference (PBR) method. The PBR device function 2005 provides a device side communication functions for PBR printing, such as a response and the like to print instruction, various enquiries, and the like from the PBR client function 2004. The Web client function 2006 receives a download request for print data from the PBR device function 2005 and requests a Web server on the network to download the print data. The Web server function 2007 responds to the download request from the Web client function 2006 in the printing apparatus 2002.

The printing system 2 in the third embodiment, which is a networked printing system, is a bilateral system, so that the PBR client function 2004 and the Web server function 2007 is implemented in the same host apparatus 2001.

FIG.19 is an internal block diagram showing a hardware configuration of the host apparatus 2001 shown in FIG. 18. Note that the same elements are designated by the same reference numerals of FIG. 18.

As shown in FIG. 19, the host apparatus 2001 includes: a CPU 2011; a ROM 2012; a RAM 2013; a network interface card (NIC) 2014; a CRT controller (CRTC) 2015; a CRT display (CRT) 2016; a remote controller light-receiving unit (RMR) 2017; a removable media controller (RMC) 2018; a removable media access device (RMA) 2019; and a system bus 2020 which connects the above elements with one another.

The CPU 2011 executes various application programs such as an OS and a printing application program, and software programs, such as various device driver programs including a network driver and the like. The ROM 2012 stores the software programs which the CPU 2011 executes. Onto the RAM 2013, software programs which are stored in the ROM, are copied at system starting-up, and the RAM 2013 provides work areas for application software programs and the OS. The NIC 2014 is a network interface card which provides an interface to the network 2003. The CRTC 2015 controls display of the CRT 2016. The RMR 2017 receives light sent from the remote controller. The RMC 2018 controls the RMA 2019. The RMA 2019 accesses a removable medium, such as a SD card. The system bus 2020 connects the CPU 2011, the ROM 2012, the RAM 2013, the NIC 2014, the CRTC 2015, the RMR 2017, and the RMC 2018 with one another.

FIG. 20 is an internal block diagram showing a hardware configuration of the printing apparatus 2002 shown in FIG. 18. Note that the same devices are designated by the same reference numerals of FIG. 18.

The printing apparatus 2002, as shown in FIG. 20, includes a controller unit 2030, a printing unit 2035, and an operation panel 2038. The controller unit 2030 includes a CPU 2031, a ROM 2032, a system bus 2033, a printing unit interface 2034, and an input unit 2036.

The CPU 2031 in the controller unit 2030 performs overall controlling, based on a control program stored in a program ROM of the ROM 2032, for access to the various devices connected to the system bus 2033, and outputs image signals as output information to the printing unit (print engine) 2035 which is connected via the printing unit interface 2034.

Further, the program ROM in the ROM 2032 stores a control program which the CPU 2031 can execute, and the like. Still further, a font ROM in the ROM 2032 stores font data used to generate the above-mentioned output information, and the like, while a data ROM in the ROM 2032 stores information used in the host apparatus 2001, and the like.

The CPU 2031 executes communication processing via the input unit 2036 with the host apparatus 2001, and notifies information in the printing apparatus 2002 and the like to the host apparatus 2001.

The RAM 2037 serves mainly as a main memory, a work area, and the like of the CPU 2031. In addition, the RAM 2037 is used as an output information development area, an environmental data storage area, NVRAM, and the like.

Moreover, the operation panel 2038 has a structure in which a switch, LED indicator, and the like for operation are arranged. Here, the NVRAM (not shown) may store printer mode setting information which is inputted from the operation panel 2038, for each user and for each group.

FIG. 21 is a diagram showing a functional configuration of the host apparatus 2001 shown in FIG. 18.
The host apparatus 2001 includes a printing application 2041, a print service 2042, a PBR client port 2043, a printer information management unit 2044, a print data buffer 2045, a SD data management unit 2046, and a Web server 2047.

The printing application 2041 creates, using a print data creating function of the print service 2042, parent sub-data and child sub-data which are included in print data, stores the parent sub-data and the child sub-data into the print data buffer 2045, and requests the print service 2042 to print the parent sub-data and the child sub-data.

The print service 2042 provides the printing application 2041 with print data forming service, job management service, printer management service, and printing management service. Note that the third embodiment describes printing of print data which is described in XHTML-Print.

Here, the XHTML-Print refers to a language which is a HTML language re-described based on XML and added with subsets and a further function, in order to reduce loads on print processing and the like, and the XHTML-Print is standardized by Printer Working Group (PWG).

The PBR client port 2043 provides the PBR client function 2004. The PBR client port 2043 transmits a URI print request to the printing apparatus 2002 and receives a response to the URI print request, and also receives a job status notification event and a printer status notification event from the printing apparatus 2002. The printer information management unit 2044 manages status information regarding the printer and network address information regarding the printer.

The print data buffer 2045 is formed in the RAM 2013 and stores the parent sub-data and the child sub-data temporarily. The SD data management unit 2046 manages data in the SD memory card which is accessed by the RMA 2019. The Web server 2047 provides the Web server function 2007. Then, the Web server 2047 receives a pull request from the printing apparatus 2002, and sends data designated by an URL in the pull request, back to the printing apparatus 2002.

Note that the printing application 2041, the print service 2042, the PBR client port 2043, the printer information management unit 2044, the SD data management unit 2046, and the Web server 2047 are software programs, and these software programs are realized by execution of the CPU 2011.

FIG. 22 is a diagram showing a functional configuration of the controller unit 2030 in the printing apparatus 2002 shown in FIG. 18.

The controller unit 2030 includes a PBR device port 2051, a job manager 2052, a job management table 2053, a printer manager 2054, a printer status record 2055, a XHTML-print interpreter 2056, a layout calculation unit 2057, a rasterizer 2058, and a Web client 2059.

The PBR device port 2051 provides the PBR device function 2005. Then, the PBR device port 2051 receives an URI print request from the host apparatus 2001 and transmits a response to the URI print request, and also transmits the job status notification event and the printer status notification event to the host apparatus 2001.

The job manager 2052 performs receiving processing for the the URI print request which is received via the PBR device port 2051, and performs job management. The job management table 2053 is used when the job manager 2052 performs the job management. The printer manager 2054 manages an apparatus status of the printing apparatus 2002. The printer status record 2055 stores apparatus information of the printing apparatus 2002.

The XHTML-print interpreter 2056 performs parsing processing and interpreting processing for print data which is described in XHTML-Print. The layout calculation unit 2057 receives a processing result of the XHTML-print interpreter 2056, and calculates layout information of a print output. The rasterizer 2058 receives a calculation result of the layout calculation unit 2057, calculates image signals which are output data to be outputted to the printing unit 2035, outputs the calculated image signals to the printing unit 2035, and manages the printing unit 2035.

The Web client 2059 provides the Web client function 2006, sends a pull request to the host apparatus 2001, and receives data.

Note that the PBR device port 2051, the job manager 2052, the XHTML-print interpreter 2056, the layout calculation unit 2057, the rasterizer 2058, and the Web client 2059 are software programs, and these software programs are realized by execution of the CPU 2031 in the controller unit 2030.

Moreover, the job management table 2053 and the printer status record 2055 are stored in the RAM 2037 of the controller unit 2030.

FIG. 23 is a diagram showing a printer status of the printing apparatus shown in FIG. 18.
"Paper empty", "Paper jam", "Ink empty", "Output tray open", and "Fatal error" shown in FIG. 23 are statuses generally used for printers.

"parent sub-data no need" and "data no need" are statuses which are additionally defined in this description. The "parent sub-data no need" status indicates a status that the printing apparatus 2002 completes processing for parent sub-data (equivalent to XHTML-Print data in the third embodiment) and the parent sub-data in the host apparatus 2001 becomes no longer necessary. The "data no need" status indicates a status that the printing apparatus 2002 completes processing for print data and the print data in the host apparatus 2001 becomes no longer necessary. When the print data includes plural pieces of sub-data, the status becomes the "data no need" status when all sub-data become no longer necessary.

FIG. 24 is a diagram showing a field structure of the printer status record shown in FIG. 22.

The printer status record 2055 includes a printer ID field 2071 and a printer status field 2072. The printer ID field 2071 stores printer ID information for identifying the printing apparatus 2002. The printer status field 2072 stores the printer status defined in FIG. 23.

FIG. 25 is a diagram showing a structure example of a job status of the printing apparatus 2002.
"Pending", "Pending-held", "Processing", "Processing-held", "Canceled", "Aborted", and "Completed" shown in FIG. 25 are statuses generally used for printers.

"Processing-parent sub-data no need" and "Processing-data no need" are statuses additionally defined in this description. The "Processing-parent sub-data no need" status indicates a status that processing of a job for parent sub-data (equivalent to XHTML-Print data in the third embodiment) is completed and the parent sub-data in the host apparatus 2001 becomes no longer necessary. The "Processing-data no need" status indicates a status that processing of a job for print data is completed and the print data in the host apparatus 2001 becomes no longer necessary. When the print data includes plural pieces of sub-data, the status becomes the "Processing-datanoneed" status when all sub-data become no longer necessary.

FIG. 26 is a diagram showing a structure of the job status record formed in the job management table 2053.

The job status records 2091, whose number corresponds to the number of jobs, are formed in the job management table, and each of the job status records 2091 stores job status information of each job and includes a job ID field 2092 and a job status field 2093. The job ID field 2092 stores job ID information for identifying a job. The job status field 2093 stores a job status defined in FIG. 25.

FIG. 27 is a diagram showing a structure of a printer status packet.
The printer status packet 2101 is used to notify a printing status of the printing apparatus 2002 to a communication partner, and includes a header 2102 and a header 2102. The header 2102 stores packet header information. The printer status field 2103 stores the printer status defined in FIG. 23.

FIG. 28 is a diagram showing a structure of the job status packet.
The job status packet 2111 is used to notify a job status of the printing apparatus 2002, and includes: a header 1112 which stores the packet header information; a Job ID field 1113 which stores job ID information for identifying a job; and a job status field 2114 which stores job status information. In the job status field 2114, the job status defined in FIG. 25 is described.

The following describes one application according to the third embodiment.
In this application, print data includes plural pieces of sub-data, and these sub-data are stored in the print data buffer 2045 of the host apparatus 2001. In this case, it is appropriate that deletion of the print data from the print data buffer 2045 is performed when the printing apparatus 2002 completes processing for all sub-data and the all sub-data become no longer necessary. Information regarding that all sub-data in the host become no longer necessary is notified as a printer status to the printing apparatus 2002.

FIG. 29 is a diagram showing a structure of print data of this application.
The print data 2121 includes plural pieces of sub-data, namely, parent sub-data 2122 and child sub-data (image data) 2123a to 2123c. The parent sub-data 2122 is data described in a XHTML-Print language. The child sub-data 2123a, 2123b, and 2123c are image data (img01.jpg, img02.jpg, img03.jpg) corresponding to the child data referred by the parent sub-data 2122. Each print data 2121 always has one parent sub-data 2122. The child sub-data 2123a, 1123b, and 2123c are located at the same place as the parent sub-data 2122, and are associated with the parent sub-data 2122.

FIG. 30 is a diagram showing a place for storing the print data 2121. Note that, in FIG. 30, a RAM 2013 and a RMA 2019 are shown.

In the RAM 2013, a print data buffer 2045 and a printing application work area 2132 are stored. The application work area 2132 is an area which the printing application 2041 uses as an work area. In the third embodiment, the print data buffer 2045 stores all of the parent sub-data 2122 and the child sub-data 2123a to 2123c. The SD card memory 2133 is a card memory which is inserted into the removable media access device (RMA) 2019. Print data can be stored in the SD card memory 2133 to be used as print data. In the third embodiment, the SD card memory 2133 is not used.

FIG. 31 is a diagram showing a communication sequence between the host apparatus 2001 and the printing apparatus 2002 according to the third embodiment, FIG. 32 is a flowchart showing data processing performed by the host apparatus 2001 according to the third embodiment, and FIG. 33 is a flowchart showing data processing performed by the printing apparatus 2002 according to the third embodiment.

With reference to FIGS. 31 to 33, the communication sequence between the host apparatus 2001 and the printing apparatus 2002, and each internal operation are described.

The printing application 2041, using a print data creating function of the print service 2042, creates parent sub-data 2122 and child sub-data 2123a to 1123c, and stores the created parent sub-data 2122 and child sub-data 2123a to 1123c into the print data buffer 2045. The printing application 2041 requests the print service 2042 to perform printing. The print service 2042 starts the Web server, if the Web server 2047 does not start (S2502).

The print service 2042 registers the parent sub-data 2122 and the child sub-data 2123a to 2123c into the internal management database, and manages the parent sub-data 2122 and the child sub-data 2123a to 2123c (S2503, S2504). Then, the print service 2042 requests the PBR client port 2043 to issue an URI print request to the printing apparatus 2002.

The PBR client port 2043 (host apparatus 2001) sends the URI print request to the printing apparatus 2002 (S2401).

Here, by the URI print request, to the image forming apparatus 2002 is sent a request (equivalent to "URI print request (all-data:ON) in FIG. 31) for presenting the followings:
- a URL which designates the print data;
- print conditions;
   as well as
- printer status information which is to be presented when the print data stored in the host apparatus becomes no longer necessary. In the third embodiment, the parent sub-data 2122 is designated by the URL. Transmission of the URI print request and receiving of the response to the URI print request are performed by the PBR client port 2043.

When the job manager 2052 in the printing apparatus 2002 receives the URI print request, the job manager 2052 issues a job, and creates the job status record 2091 corresponding to the issued job and registers the job status record into the job management table 2053 (S2602). Then, after the registering, the PBR device port 2051 sends back a response to the URI print request (S2402). The printer manager 2054 sets an internal status, so that when a printer status became a "data no need" status (see FIG. 23), the host apparatus 2001 executes a printer status notification event.

Next, the job manager 2052 instructs the Web client 2059 to download print data (actually, the parent sub-data 2122) which is designated by the URL in the URI print request, and the Web client 2059 transmits a pull request "pull request (topppage.xhtmlp)" to the host apparatus 2001 (S2603, S2403). The Web server 2047 in the host apparatus 2001 receives the pull request (S2505), retrieves the parent sub-data 2122 (toppage.xhtmlp) from the print data buffer 2045, and transmits the retrieved parent sub-data 2122 to the printing apparatus 2002 (S2506, S2404).

When the Web client 2059 receives the parent sub-data 2122 from the host apparatus 2001 (S2604), the Web client 2059 transfers the parent sub-data 2122 via the job manager 2052 to the XHTML-print interpreter 2056, and the XHTML-print interpreter 2056 interprets the parent sub-data 2122 (S2605), converts the parent sub-data 2122 into a document object model (DOM) tree indicating a structure of the document, and transfers the DOM tree to the layout calculation unit 2057. The layout calculation unit 2057 performs layout calculation using the DOM tree (S2606), and identifies child sub-data (image data) 2123a to 2123c which are referred by the parent data (XML data) 2122 (S2607). Note that in the subsequent processing, the XHTML-print interpreter 2056 is not used.

Next, the layout calculation unit 2057 instructs the Web client 2059 to download firstly the child sub-data 2123a (img01.jpg) (S2608), and the Web client 2059 transmits, to the host apparatus 2001, a pull request "pull request (img01.jpg)" (S2405).

When the Web the server 2047 in the host apparatus 2001 receives the pull request (S2505), the Web the server 2047 retrieves the child sub-data 2123a (img01.jpg) from the print data buffer 2045, and transmits the retrieved child sub-data 2123a to the printing apparatus 2002 (S2506, S2406).

When the child sub-data 2123a (img01.jpg) is received (S2609), the Web client 2059 transfers the received child sub-data 2123a (img01.jpg) to the layout calculation unit 2057, the layout calculation unit 2057 makes the rasterizer 2058 perform rasterizing (S2610) to create output data to be outputted to the printing unit 2035. After creating the output data, the rasterizer 2058 transmits the output data to the printing unit 2035, and the printing unit 2035 prints the data (S2611).

For the child sub-data 2123b (img02.jpg) and the child sub-data 2123c (img03.jpg), the same processing as described for the child sub-data (image data) 2123a (img01.jpg) is performed (S2407 to S2410, S2505 to S2506, S2608 to S2611).

The layout calculation unit 2057 determines whether or not the data processing for the child sub-data (image data) 2123a to 2123c is completed and the child sub-data (image data) 2123a to 2123c in the host apparatus 2001 become no longer necessary (S2612), and if the child sub-data (image data) 2123a to 2123c in the host apparatus 2001 are no longer necessary, the layout calculation unit 2057 notifies the printer manager 2054 of that the child sub-data (image data) 2123a to 2123c in the host apparatus 2001 become no longer necessary. The printer manager 2054 writes a status value "data no need" in the printer status field 2072 of the printer status record 2055, and request the PBR device port 2051, via the job manager 2052, to transmits the printer status notification event to the host apparatus 2001 (S2613). In other words, transmission of a notification of unnecessity of the print data is requested. The PBR device port 2051 creates a printer status packet 2101 in which "data no need" is set in the printer status field 2103, and transmits the printer status packet 2101 to the host apparatus 2001 (S2411).

When the PBR client port 2043 receives the printer status notification event, the PBR client port 2043 notifies the printer status notification event to the print service 2042, and the print service 2042 determines, based on the event "data no need", that the parent sub-data 2122 and the child sub-data 2123a to 2123c stored in the print buffer 2045 can be deleted (S2507), and deletes those data, or delete the data buffer 2045 from the RAM 2013 (S2508, S2412). Here, since a service of transferring the pint data is no longer necessary, the Web server 2047 is stopped (S2509).

After that, the layout calculation unit 2057 has the printing unit 2035 process remains of print outputting via the rasterizer 2058 (S2614), and complete the print outputting (S2615), and when the completion of the outputting is detected, the completion is notified to the job manager 2052, and the job manager 2052 request the PBR device port 2051 to transmit a job status packet 2111 in which "completed" in written in a job status field, to the host apparatus 2001, and the PBR device port 2051 transmits the job status packet 2111 to the host apparatus 2001 (S2413).

When the host apparatus 2001 receives the job status packet 2111, the host apparatus 2001 learns the completion of the print outputting by the printing apparatus 2002 (S2414).

As described above, in the third embodiment, the print data has plural pieces of sub-data, and those sub-data are stored in the print data buffer of the host apparatus, and deletion of the print data from the print data buffer is requested by the printing apparatus as a printer status when the printing apparatus completes processing of all sub-data and the all sub-data become no longer necessary. Thereby, the host apparatus deletes the print data from the print data buffer of the host apparatus, so that it is possible to release system resources such as a memory, earlier than a timing of the completion of printing. Therefore, the above-described effect becomes greater when the printer engine processing performance is low or when large-sized image data is processed.

(Fourth Embodiment)
Next, an application according to the fourth embodiment is described.

This application is applied when print data includes plural pieces of sub-data, but only parent sub-data is stored to the print data buffer 2045, while child sub-data are stored to an external memory such as a removable memory card medium.

In this case, it is appropriate that deletion of the print data from the print data buffer 2045 is performed when the printing apparatus 2002 completes processing for the parent sub-data and the parent sub-data becomes no longer necessary. Information regarding that the parent sub-data in the host becomes no longer necessary is notified as a printer status to the printing apparatus 2002.

FIG. 34 is a diagram showing a structure of the print data according to the fourth embodiment. Note that, in FIG. 34, the RAM 2013 and the RMA 2019 are shown.

The print data 2171 includes parent sub-data 2172 and child sub-data 2173a to 2173c. The parent sub-data 2172 is parent data described in a XHTML-Print language and is sub-data of the print data 2171. The child sub-data 2173a to 2173c are child sub-data which are referred by the parent sub-data 2172, and are sub-data of the print data 2171. The child sub-data 2173a to 2173c are image data. The child sub-data 2173a to 2173c are located at a place different from a place of the parent sub-data 2172, and are associated with the parent sub-data 2172.

FIG. 35 is a diagram showing a place for storing the print data. Note that the same elements are designated by the same reference numerals of FIG. 30 and the detail of those elements are not described again below.

In the fourth embodiment, only the parent sub-data 2172 is stored to the print data buffer 2045, while the child sub-data 2173a to 2173c are stored to the SD card memory 2133. in this aspect, the fourth embodiment differs from the third embodiment.

FIG. 36 is a diagram showing a communication sequence between the host apparatus 2001 and the printing apparatus 2002 according to the fourth embodiment. Note that, FIG. 36 is the same as FIG. 31 except some steps, and the same processing are designated by the same Step numerals of the processing of FIG. 31. This processing is added with Step S2901 and Step S2902.

Further, FIG. 37 is a flowchart showing data processing performed by the host apparatus 2001 according to the fourth embodiment. FIG. 37 is the same as FIG. 32 except some steps, and the same processing are designated by the same Step numerals of the processing of FIG. 32. This processing is added with Step S3001 and Step S3002.

Still-further, FIG. 38 is a flowchart showing data processing performed by the printing apparatus 2002 according to the fourth embodiment. FIG. 38 is the same as FIG. 33 except some step, and the same processing are designated by the same Step numerals of the processing of FIG. 33. This processing is added with Step S3102.

Next, with reference to FIGS. 36 to 38, the communication sequence between the host apparatus 2001 and the printing apparatus 2002, and each internal operation are described. Note that, regarding processing which are the same as the processing designated by the same Step numerals of FIG. 31 to 33, only processing necessary to explain the fourth embodiment are described.

The PBR client port 2043 (host apparatus 2001) sends a URI print request to the printing apparatus 2002 (S2401).

Here, by the URI print request, to the image forming apparatus 2002 is sent a request (equivalent to "URI print request (parent sub-data:ON) in FIG. 36) for presenting the followings:
- a URL which designates the print data;
- print conditions;
   as well as
- printer status information which is to be presented when the print data stored in the host apparatus becomes no longer necessary (S2401).
   In the third embodiment, the parent sub-data 2122 is designated by the URL. Transmission of the URI print request and receiving of the response to the URI print request are performed by the PBR client port 2043.

When the job manager 2052 in the printing apparatus 2002 receives the URI print request, the job manager 2052 issues a job, and creates the job status record 2091 corresponding to the issued job and registers the job status record into the job management table 2053 (S2602). After the registering, the PBR device port 2051 sends back a response to the URI print request (S2402).

When a printer status became a "parent sub-data no need" status (see FIG. 23), the printer manager 2054 sets an internal status of the host apparatus 2001 to execute a printer status notification event.

Next, the job manager 2052 instructs the Web client 2059 to download print data (actually, the parent sub-data 2172) which is designated by the URL in the URI print request, and the Web client 2059 transmits a pull request "pull request (SDtopppage.xhtmlp)" to the host apparatus 2001 (S2603, S2403).

The Web server 2047 in the host apparatus 2001 receives the pull request (S2505), retrieves the parent sub-data 2122 (SDtoppage.xhtmlp) from the print data buffer 2045, and transmits the retrieved parent sub-data 2122 to the printing apparatus 2002 (S2506, S2404).

When the Web client 2059 receives the parent sub-data 2122 from the host apparatus 2001 (S2604), the Web client 2059 transfers the parent sub-data 2172 via the job manager 2052 to the XHTML-print interpreter 2056, and the XHTML-print interpreter 2056 interprets the parent sub-data 2122 (S2605), and converts the parent sub-data 2172 into a document object model (DOM) tree indicating a structure of the document.

Here, the XHTML-Print interpreter determines whether or not the processing for the parent sub-data 2172 is completed and the parent sub-data 2172 in the host apparatus 2001 becomes no longer necessary, and if the determination is made that the parent sub-data 2172 is no longer necessary, the information regarding that the parent sub-data 2172 is no longer necessary is notified to the print manager 2054.

The printer manager 2054 writes a status value "parent sub-data no need" in the printer status field 2072 of the printer status record 2055, and requests the PBR device port 2051, via the job manager 2052, to transmit a printer status notification event to the host apparatus 2001.

The PBR device port 2051 creates a printer status packet 2101 in which "parent sub-data no need" is set in the printer status field 2103, and transmits the printer status packet 2101 to the host apparatus 2001 (S2901).

When the PBR client port 2043 receives the printer status notification event, the PBR client port 2043 notifies the printer status notification event to the print service 2042, and the print service 2042 determines, based on the event "parent sub-data no need", that the parent sub-data 2172 stored in the print buffer 2045 can be deleted (S3001), and deletes the parent sub-data 2172, or delete the data buffer 2045 from the RAM 2013 (S3002, S2902).

The subsequent processing is the same as the processing of the third embodiment, except that the processing does not have the processing for notifying the printer status "all data no need".

As described above, in the above-described fourth embodiment, the print data has plural pieces of sub-data, and among the sub-data, the parent sub-data is stored to the print data buffer, while the child sub-data are stored to the external memory such as a removable memory card medium, and when the printing apparatus completes the processing for the parent sub-data and the parent sub-data becomes no longer necessary, information regarding that the parent sub-data is no longer necessary is notified as a printer status to the host apparatus, and the host apparatus receives the notification and deletes the parent sub-data.

Thereby, the host apparatus can learn unnecessity of the parent sub-data, earlier than a timing of the completion of the processing of the parent sub-data which is processed early in the printing apparatus, so that it is possible to delete the parent sub-data and release the print data buffer, much earlier as compared to the third embodiment. Regarding an advantage of deleting the parent sub-data early, depending on the application, the parent sub-data is sometimes quite large. In such a case, an available capacity of the RAM becomes small due to storage of the parent sub-data, so that with such a limited memory, when the printing application is finished and another application is to be started, the another application which needs a larger memory is sometimes not able to be started or, even if the application is able to be started, operations of the application sometimes become slow. In this case, in the fourth embodiment, deletion of the parent sub-data and release of the memory can be performed early, so that recovery from a memory limited status can be expedited, and the present invention has a high usability.

(Fifth Embodiment)
Next, an application according to the fifth embodiment is described.

This application is applied when print data includes plural pieces of sub-data, but only parent sub-data is stored to the print data buffer in the host apparatus, while child sub-data are stored to a different server apparatus. In this case, it is appropriate that deletion of the print data from the print data buffer in the host apparatus is performed when the printing apparatus completes processing for the parent sub-data and the parent sub-data becomes no longer necessary, which is the same as the fourth embodiment. Information regarding that the parent sub-data in the host becomes no longer necessary is notified as a printer status to the printing apparatus.

FIG. 39 is a system configuration diagram of a networked printing system which includes a server apparatus, a host apparatus, and a printing apparatus, according to the fifth embodiment. Note that, in FIG. 39, the same elements are designated by the same reference numerals of FIG. 18 and the detail of those elements are not described again below.

As shown in FIG. 39, a printing system 3 is a tripartite networked printing system which includes the host apparatus 2001, the printing apparatus 2002, and additionally a server apparatus 2008. However, print data is dispersedly stored in the host apparatus 2001 and the server apparatus 2008, so that the Web server function 2007 exists not only in the server apparatus 2008 but also in the host apparatus 2001.

FIG. 40 is a diagram showing a structure of the print data according to the fifth embodiment.
The print data 2231 includes parent sub-data 2232 and child sub-data 2233a to 2233c. The parent sub-data 2232 is parent data described in a XHTML-Print language and is sub-data of the print data 2231. The child sub-data 2233a to 2233c are child sub-data which are referred by the parent sub-data 2232, and are sub-data of the print data 2231. The child sub-data 2233a to 2233c are image data. The child sub-data 2233a to 2233c are located in the server apparatus 2008, and are associated with the parent sub-data.

FIG.41 is a diagram showing a place for storing the print data. Note that the same elements are designated by the same reference numerals of FIG. 30 and the detail of those elements are not described again below.

As shown in FIG. 41, the server apparatus 2008 includes a hard disk device 3401. The hard disk device 3401 is a hard drive for storing the print data and the like. In the fifth embodiment, only the parent sub-data 2232 is stored to the print data buffer 2045 in the host apparatus, while the child sub-data 2233a to 2233c are stored to the hard disk device 3401 in the server apparatus 2008. In this aspect, the fifth embodiment differs from the fourth embodiment.

FIG. 42 shows a communication sequence among the host apparatus 2001, the printing apparatus 2002, and the server apparatus 2008, according to the fifth embodiment. Note that, FIG. 42 is basically the same as FIGS. 31 and 36, and the same processing are designated by the same Step numerals of the processing of FIGS. 31 and 36. Note also that, difference between the fourth embodiment and the fifth embodiment is described by comparing FIG. 42 to FIG. 36.

In FIG. 36, at Steps S2403 and S2404, the printing apparatus 2002 issues a pull request for "SDtopppage.xhtmlp", while in FIG. 42, a pull request is issued for "SVtopppage.xhtmlp", but, the internal processing in the printing apparatus 2002 differs from the fourth embodiment only in the parent sub-data for which a pull request is issued, and is basically the same as the processing of the fourth embodiment.

In FIG. 36, at Steps S2405 and S2406, a pull request for SDimg01.jpg is issued to the host apparatus 2001, while in FIG. 42, a pull request for SVimg01.jpg is issued to the server apparatus 2008. Not that the internal processing of the printing apparatus 2002 at Step S2405 is the same as the processing of the fourth embodiment except the data to be pulled and the apparatus to be accessed. Not also that the internal processing of the server apparatus 2008 at Step S2406 is the same as the internal processing of the host apparatus 2001 in the fourth embodiment except the child sub-data to be processed.

The same goes for Steps S2407 to S2410. The timing of deleting the parent sub-data 2232 from the print data buffer 2045 and releasing the print data buffer is the same as described in the fourth embodiment.

As described above, in the fifth embodiment, the print data has plural pieces of sub-data, but among the sub-data, the parent sub-data is stored to the print data buffer in the host apparatus, while child sub-data are stored to the server apparatus, and when the printing apparatus completes the processing for the parent sub-data and the parent sub-data becomes no longer necessary, the information regarding that the parent sub-data is no longer necessary is notified as a printer status to the host apparatus, and the host apparatus receives the notification and deletes the parent sub-data.

Thereby, the host apparatus can learn unnecessity of the parent sub-data, at a timing of the completion of the processing of the parent sub-data which is processed early in the printing apparatus, so that it is possible to delete the parent sub-data and release the print data buffer, much earlier as compared to the third embodiment.

Further, the fifth embodiment is different from the fourth embodiment in that, after receiving the notification of unnecessity of the parent sub-data, data communication is performed only between the printing apparatus and the server apparatus, so that there is no load in the host apparatus, and the printing processing can be continued even if the host apparatus is stopped. In the fifth embodiment as well as the fourth embodiment, when the parent sub-data is quite large, deletion of the parent sub-data and release of the memory can be performed early, so that recovery from a memory limited status can be expedited, and the present invention has a high usability.

Note that, in the third to fifth embodiments, using the printer status, the printing apparatus notifies that the whole print data or the parent sub-data in the host apparatus becomes no longer necessary, but the notification may be performed by using a job status. A job status regarding the whole print data is "Processing-data no need" indicated in FIG. 25, and a status regarding only the parent data is "Processing-parent sub-data no need". Each job status value is set in the job status field 2114 to be transmitted.

Note also that, in the third to fifth embodiments, the printing apparatus notifies that the whole print data or the parent sub-data in the host apparatus becomes no longer necessary, but it is also possible to issue the printer status or the job status as a response to an enquiry from the host apparatus.

Note also that, in the third and fourth embodiments, the printing apparatus and the host apparatus are connected on a network via a LAN, but these apparatuses may be directly connected with each other using an universal serial bus (USB) or the like.

Note also that the first to fifth embodiments have described the example in which one job has three image objects (first embodiment), and the like, but the present invention is not limited to the case of only three image objects and, of course, may be also applied to any cases of a plurality of the image objects.

Note also that the first to fifth embodiments have described the processing for print data of a single job, but the present invention may, of course, be applied to processing for print data of a plurality of jobs.

That is, when the print instruction apparatus (host apparatus or document image supplying apparatus) holds print data for each job in the print buffer, print data of a job which is no longer obtained again by the printing apparatus (image forming apparatus or printer) can be deleted prior to completion of printing of the series of jobs. In this case, for example, the print instruction apparatus manages the plurality of jobs to be issued to the printing apparatus, and the printing apparatus manages jobs which are among the jobs to be printed but have already been read, as an already-read list. Here, this already-read list means a list used to manage the data which are indicated in the list and are no longer read again.

More specifically, as shown in FIG. 43, the print instruction apparatus (host apparatus or document image supplying apparatus) stores data of six print jobs (jobs 5 to 10) into the print data buffer, and manages, in the job list, IDs of the respective jobs, namely, 5, 6, 7, 8, 9, and 10. Then, as shown in FIG. 44, the printer has already read data of the jobs 5 , 6, and 7, is currently reading data of the job 8, and is currently printing data of the job 5. In this case, if the printer manages the IDs 5, 6, and 7 of the jobs 5, 6, and 7, as the already-read list, by sending the IDs 5, 6, and 7 as the already-read list to the print instruction apparatus as a printer status, the print instruction apparatus can determine from the printer status that data of the jobs 5, 6, and 7 are no longer necessary, so that it is possible to promptly release the data of the jobs 5, 6, and 7 from the print data buffer, and to release the print data buffer. This means that the present invention can be applied to the case of a plurality of jobs.

Note also that the above embodiments have described the case where the child sub-data is image data, in other words, where the number of HTML is one, but the child sub-data may be the HTML, or the image data may be grand-child sub-data linked to the HTML which is the child sub-data. This means that, the present invention can be applied to the case where the parent sub-data and the child sub-data are linked to the image data.

### Industrial Applicability

A printing apparatus according to the present invention can be applied as, for example, a printer when the printer uses a Print-by-Reference method and a host apparatus has a server function for print data, and a print instruction apparatus (host apparatus or document image supplying apparatus) according to the present invention can be applied as, for example, a digital television set or a set-top box (STB) when the print instruction apparatus has a server function for print data and uses the Print-by-Reference method.

## Claims

1. A printing apparatus which receives a print instruction, then obtains print data including plural pieces of sub-data, and prints the print data, said printing apparatus comprising:
a print data obtainment unit operable to obtain the sub-data;
a determination unit operable to determine whether or not there is necessity of further obtaining of the obtained sub-data, by said data obtainment unit, in order to complete printing of the print data; and
a notification unit operable to notify a result of the determination, to a print instruction apparatus which issues the print instruction, when the determination is made that there is no necessity.

2. The printing apparatus according to Claim 1,
wherein the print data includes one parent sub-data and one or more child sub-data which are referred to by the parent sub-data,
said print data obtainment unit is operable to obtain the parent sub-data prior to child sub-data, and
said determination unit is operable to determine the necessity regarding the child sub-data referred to by the obtained parent sub-data.

3. The printing apparatus according to Claim 2,
wherein said determination unit is operable to determine that there is no necessity, when the child sub-data obtained by said print data obtainment unit is referred to by only one part in the parent sub-data.

4. The printing apparatus according to Claim 2,
wherein said determination unit is operable to determine that there is no necessity, when the child sub-data obtained by said print data obtainment unit is not further referred to by the parent sub-data.

5. The printing apparatus according to Claim 2,
wherein the child sub-data referred to by the parent sub-data includes grand-child sub-data referred to by the child sub-data.

6. The printing apparatus according to Claim 2,
wherein said determination unit is operable to determine the necessity only regarding the parent sub-data.

7. The printing apparatus according to Claim 1,
wherein said notification unit is operable to notify a result of the determination, only when a request for the notification is received from the print instruction apparatus.

8. The printing apparatus according to Claim 7,
wherein said notification unit is operable to determine whether or not the print instruction includes the request for the notification, and to notify a result of the determination regarding the necessity, only when the request is included.

9. The printing apparatus according to Claim 2,
wherein the parent sub-data is described in a markup language, and the child sub-data is data except the data described in the markup language.

10. The printing apparatus according to Claim 9,
wherein the parent sub-data is described in a hyper text markup language (HTML), and the child sub-data is one of image data and style information data.

11. A printing method of receiving a print instruction, then obtaining print data including plural pieces of sub-data, and printing the print data, said printing method comprising:
a print data obtaining step of obtaining the sub-data;
a determining step of determining whether or not there is necessity of further obtaining of the obtained sub-data, at said data obtaining step, in order to complete printing of the print data; and
a notifying step of notifying a result of the determination, to a print instruction apparatus which issues the print instruction, when the determination is made that there is no necessity.

12. A program used in a printing apparatus, the printing apparatus receiving a print instruction, then obtaining print data including plural pieces of sub-data, and printing the print data,
said program causing a computer to execute the steps included in the printing method according to Claim 11.

13. A print instruction apparatus which instructs a printing apparatus to print print data including plural pieces of sub-data, said print instruction apparatus comprising:
a print buffer in which at least one of the sub-data is held;
a print data output unit operable to output the sub-data held in said print buffer, to the printing apparatus;
a necessity receiving unit operable to receive, from the printing apparatus, a notification that there is no necessity of further obtaining of the outputted sub-data, by the printing apparatus, in order to complete printing of the print data; and
a deletion unit operable to delete the sub-data corresponding to the notification, from said print buffer, when the notification is received.

14. The print instruction apparatus according to Claim 13,
wherein the print data includes one parent sub-data and one or more child sub-data which are referred to by the parent sub-data,
said print buffer in which only the parent sub-data is held among the sub-data included in the print data, and
said deletion unit is operable to delete the parent data from said print buffer.

15. A memory release control method of releasing a print buffer in a print instruction apparatus, the print instruction apparatus instructing a printing apparatus to print print data including plural pieces of sub-data, said memory release control method comprising:
a step of holding at least one of the sub-data in the print buffer;
a print data outputting step of outputting the sub-data held in the print buffer, to the printing apparatus;
a necessity receiving step of receiving, from the printing apparatus, a notification that there is no necessity of further obtaining of the outputted sub-data, by the printing apparatus, in order to complete printing of the print data; and
a deleting step of deleting the sub-data corresponding to the notification, from the print buffer, when the notification is received.

16. A program used in a print instruction apparatus, the print instruction apparatus instructing a printing apparatus to print print data including plural pieces of sub-data,
said program causing a computer to execute the steps included in the memory release control method according to Claim 15.

17. A printing system which includes a printing apparatus and a print instructing apparatus, the print instruction apparatus instructing the printing apparatus to print print data including plural pieces of sub-data,
wherein said printing apparatus includes:
a print data obtainment unit operable to obtain the sub-data;
a determination unit operable to determine whether or not there is necessity of further obtaining of the obtained sub-data, by said data obtainment unit in order to complete printing of the print data; and
a notification unit operable to notify a result of the determination to the print instruction apparatus, when the determination is made that there is no necessity, and
said print instruction apparatus includes:
a print buffer in which at least one of the sub-data is held;
a print data output unit operable to output the sub-data held in said print buffer, to the printing apparatus;
a necessity receiving unit operable to receive the notification from the printing apparatus; and
a deletion unit operable to delete the sub-data corresponding to the notification, from the print buffer, when the notification is received.

18. A printing method used in a system which includes a printing apparatus and a print instructing apparatus, the print instruction apparatus instructing the printing apparatus to print print data including plural pieces of sub-data, said printing method comprising:
a transferring step of transferring the sub-data held in a print buffer of the print instruction apparatus, to the printing apparatus;
a determining step of determining whether or not there is necessity of further transferring the transferred sub-data from the print instruction apparatus to the printing apparatus, in order to complete printing of the print data in the printing apparatus;
a notifying step of notifying a result of the determination from the printing apparatus to the print instruction apparatus, when the determination is made that there is no necessity; and
a deleting step of deleting the sub-data held in the print buffer of the print instruction apparatus, when the notification is performed.
